Europäisches Patentamt

European Patent Office

Office européen des brevets

(19)

(11) Veröffentlichungsnummer: **0 066 888**
**B1**

(12) **EUROPÄISCHE PATENTSCHRIFT**

(45) Veröffentlichungstag der Patentschrift:
**27.09.89**

(51) Int. Cl.⁴: **G 01 S 7/48**

(21) Anmeldenummer: 82105038.2

(22) Anmeldetag: **08.06.82**

(54) Entfernungsmessverfahren und Vorrichtung zu seiner Durchführung.

(30) Priorität: 09.06.81 DE 3122806
24.05.82 DE 3219423

(43) Veröffentlichungstag der Anmeldung:
15.12.82 Patentblatt 82/50

(45) Bekanntmachung des Hinweises auf die Patenterteilung:
27.09.89 Patentblatt 89/39

(84) Benannte Vertragsstaaten:
CH FR GB IT LI NL SE

(56) Entgegenhaltungen:
DE-A- 2 036 335
DE-A- 2 842 450
US-A- 3 652 161
US-A- 4 181 431

PATENTS ABSTRACTS OF JAPAN, Band 5, Nr.
38(P-52)(710), 12. März 1981; & JP - A - 55 163 471

(73) Patentinhaber: **MITEC Mikroelektronik Mikrotechnik Informatik GmbH, Prof.-Messerschmitt-Strasse 3, D-8014 Neublberg (DE)**

(72) Erfinder: **Bölkow, Ludwig, Dr., Oberfeldallee 9, D-8022 Grünwald (DE)**
Erfinder: **Chaborski, Hoiko, Englschalkinger Strasse 239E, D-8000 München 81 (DE)**
Erfinder: **Mehnert, Walter, Dr., Grillparzerstrasse 6, D-8012 Ottobrunn (DE)**

(74) Vertreter: **Strasser, Wolfgang, Dipl.-Phys et al, Patentanwälte Strohschänk, Uri & Strasser Innere Wiener Strasse 8, D-8000 München 80 (DE)**

## Beschreibung

Die Erfindung betrifft ein Verfahren zum Messen der Entfernung zwischen einem Meßort und einem Zielgegenstand gemäß dem Oberbegriff von Anspruch 1 sowie ein Entfernungsmeßgerät zur Durchführung dieses Verfahrens gemäß dem Oberbegriff von Anspruch 13.

Bei Entfernungsmeßgeräten, die nach dem Prinzip der Laufzeitmessung eines Lichtimpulses arbeiten, besteht das grundsätzliche Problem, die Zeitpunkte, in denen die Zeitmeßvorrichtung gestartet bzw. angehalten wird, so mit den Zeitpunkten zu korrelieren, in denen der zum Zielgegenstand ausgesandte Lichtimpuls erzeugt bzw. nach seiner Reflexion am Zielgegenstand wieder empfangen wird, daß ein Zeitmeßwert erhalten werden kann, der mit großer Genauigkeit der Laufzeit dieses Meßlichtimpulses entspricht und somit eine exakte Entfernungsbestimmung ermöglicht.

Besonders dann, wenn ein sehr großer Entfernungsmeßbereich, beispielsweise von 0 bis 100 km und mehr mit einer Genauigkeit von bis zu ± 1 mm ausgemessen werden soll, ergeben sich außerordentlich große Schwierigkeiten, da sowohl senderseitig zwischen dem den Sender zur Emission eines Lichtimpulses anregenden Trigger-Signal und der tatsächlichen Emission des Lichtimpulses als auch empfängerseitig zwischen Eintreffen des reflektierten Meßlichtimpulses beispielsweise an einem photoelektrischen Detektor und der Erzeugung des zugehörigen Stop-Signals für die Zeitmeßvorrichtung Verzögerungs- und Signalverarbeitungszeiten auftreten, die in der gleichen Größenordnung wie die eigentlich interessierenden «echten» Lichtimpuls-Laufzeiten liegen oder, bei kurzen Entfernungen, diese sogar erheblich übersteigen.

Es ist klar, daß bei diesen Verhältnissen dann, wenn keine entsprechenden Maßnahmen getroffen werden, sich temperaturbedingte Schwankungen bzw. alterungsabhängige Drifterscheinungen dieser Verzögerungs- und Signalverarbeitungszeiten auf das Meßergebnis so stark auswirken können, daß es unmöglich wird, die obengenannte Meßgenauigkeit zu erzielen.

Das Problem, auf der Empfängerseite eine exakte zeitliche Zuordnung zwischen dem Empfangszeitpunkt des reflektierten Lichtimpulses und dem Erzeugungszeitpunkt des Stopsignals für die Zeitmessung herzustellen, kann durch die in der DE-A-2 634 627 beschriebene Schaltungsanordnung als prinzipiell gelöst betrachtet werden.

Auf der Senderseite ist die Situation schwieriger, weil die Verzögerungszeit, mit der der Sender auf das Triggersignal anspricht, starken Änderungen unterliegen kann, so daß das Triggersignal nicht ohne weiteres als mit dem Emissionszeitpunkt exakt korreliertes Startsignal für die Zeitmeßvorrichtung verwendbar ist.

Zur Vermeidung dieses Problems ist es z. B. aus der US-A-3 652 161 oder der oben genannten DE-A-2 634 627, die der US-A-4 181 431 entspricht, bekannt, von dem vom Sender emittierten Meßlichtimpuls einen Teil abzuzweigen und einen so erzeugten Referenzlichtimpuls durch einen Photodetektor in ein mit dem Sendezeitpunkt des Meßlichtimpulses korreliertes Startsignal für die Laufzeitmessung umzusetzen. Verwendet man dabei, wie es in den obigen Patentschriften beschrieben ist, für Meßlichtimpuls und Referenzlichtimpuls zwei verschiedene Empfänger, so ergeben sich, wenn keine weiteren Maßnahmen ergriffen werden, Schwierigkeiten aus dem unterschiedlichen Ansprechverhalten und den unterschiedlichen Schwankungserscheinungen der Signalverarbeitungszeiten der beiden Empfangskanäle.

Die in der US-A-4 181 431 vorgeschlagene Korrekturmessung, bei der die beiden Empfängerschwingkreise auf elektrischem Weg gleichzeitig angestoßen werden um den dabei in den beiden Empfangskanälen auftretenden Laufzeitunterschied zu messen, kann dieses Problem nicht vollständig lösen, da mit ihr das unterschiedlich schwankende zeitliche Ansprechverhalten der beiden als optoelektrische Sensoren dienenden Photodioden nicht erfaßt werden kann.

Führt man andererseits Meßlichtimpuls und Referenzlichtimpuls ein und demselben Empfänger zu, so wird die Messung kleiner Entfernungen schwierig, da sowohl die dem Photodetektor nachgeschaltete Verstärker- und Signalerzeugungsschaltung als auch die Zeitmeßvorrichtung nur solche Signale einwandfrei verarbeiten können, die einen gewissen Mindestabstand aufweisen. Zwar ist es mit entsprechendem Schaltungsaufwand möglich, Zeitmeßvorrichtungen zu bauen, die den Zeitabstand von praktisch beliebig dicht aufeinanderfolgenden Signalen ausmessen können; die dem Photodetektor nachgeordnete Verstärker- und Signalerzeugungsschaltung hat dagegen in jedem Fall eine gewisse Freiwerdezeit, d.h. nach dem Empfang eines Lichtimpulses muß eine bestimmte Mindestzeit verstreichen, bevor ein neuerlicher Impuls einwandfrei verarbeitet werden kann. Hier ist eine untere Grenze für die kleinsten ausmeßbaren Entfernungen gegeben, die durch Maßnahmen an der Verstärker- und Signalerzeugungsschaltung zwar sehr klein gemacht, nicht aber auf Null gebracht werden kann.

Demgegenüber liegt der Erfindung die Aufgabe zugrunde, ein Verfahren und ein Entfernungsmeßgerät der eingangs genannten Art so weiterzubilden, daß auf einfache Weise und mit großer Genauigkeit Entfernungen über einen weiten Meßbereich hinweg gemessen werden können, dessen untere Grenze praktisch bei Null liegt.

Zur Lösung dieser Aufgabe sieht die Erfindung die in den Ansprüchen 1 (Verfahren) und 13 (Vorrichtung) niedergelegten Merkmale vor.

Diese erfindungsgemäßen Maßnahmen bauen auf der Erkenntnis auf, daß es zur Erzielung einer hohen Meßgenauigkeit nicht unbedingt erforderlich ist, eine genau bekannte und über lange Zeiten hinweg exakt reproduzierbare zeitliche Zuordnung zwischen dem Start-Signal für die Zeitmeßvorrichtung und dem Emissionszeitpunkt des Meßlichtimpulses bzw. dem Empfangszeitpunkt des reflektierten Meßlichtimpulses und dem Stop-Signal für die Zeitmeßvorrichtung herzustellen. Es wird vielmehr von einem völlig anderen Konzept ausgegangen, bei dem nicht mehr versucht wird, die «reine» Laufzeit eines Meßlichtimpulses zu erfassen. Stattdessen wird bei einem nach dem erfindungsgemäßen Verfahren arbeitenden Meßgerät zur Ermittlung eines einzigen Entfernungsmeßwertes für wenigstens zwei nacheinander und damit voneinander unabhängig erzeugte Lichtimpulse jeweils eine Signal-Laufzeitmessung durchgeführt, wobei der eine dieser wenigstens zwei Lichtimpulse als Meßlichtimpuls über die Meßstrecke, d.h. vom Sender zum Zielgegenstand und von dort zurück zum Empfänger, und der andere als Referenzlichtimpuls über eine geräteintern vom Sender zum Empfänger verlaufende Referenzlichtstrecke in erster Näherung bekannter und konstanter Länge gesandt wird.

In beiden Fällen liegt das Signal, dessen Laufzeit gemessen wird, für bestimmte Teile dieser Laufzeit in elektrischer Form und für andere Teile dieser Laufzeit in Form eines Lichtimpulses vor.

Nimmt man an, daß zwischen dem Zeitpunkt, in dem die Laufzeitmessung für den Meßlichtimpuls gestartet wird, und dem Zeitpunkt, in dem der Meßlichtimpuls den Sender verläßt, eine Zeit $t_1$ vergeht (die dann, wenn der letztgenannte Zeitpunkt vor dem erstgenannten liegt, ein negatives Vorzeichen erhält), daß weiterhin der Meßlichtimpuls zum Durchlaufen der Meßstrecke die Zeit $t_M$ benötigt und daß zwischen dem Eintreffen des Meßlichtimpulses am Empfänger und der Beendigung der Signal-Laufzeitmessung die Zeit $t_2$ verstreicht, so gilt für den erhaltenen Signal-Laufzeit-Meßwert $T_M$

$$T_M = t_1 + t_M + t_2 \qquad (1)$$

wobei der gesuchte Entfernungsmeßwert in der Meßlichtimpuls-Laufzeit $t_M$ enthalten ist.

Bei der Erfindung ist es nun zur Erzielung einer hohen Meßgenauigkeit nicht erforderlich, die Zeiten $t_1$ und $t_2$ genau zu kennen und/oder gegen Schwankungen oder Drifterscheinungen in besonderer Weise zu stabilisieren. Es genügt vielmehr, dafür zu sorgen, daß diese beiden Zeiten $t_1$ und $t_2$ ebenfalls in die Signal-Laufzeitmessung des Referenzlichtimpulses eingehen, so daß für den Referenzlichtimpuls gilt:

$$T_R = t'_1 + t_R + t'_2 \qquad (2)$$

und die beiden Signal-Laufzeitmessungen innerhalb eines so kurzen Zeitraumes durchzuführen, daß die schwankungsbedingten Unterschiede $t_1 - t'_1$ und $t_2 - t'_2$ vernachlässigbar klein werden, bzw. durch eine einfache Interpolation bzw. Mittelwertbildung aus mehreren Meßwerten für $T_M$ und $T_R$ entsprechend reduziert werden können.

Im ersten Fall, d.h. immer dann, wenn der Wechsel zwischen der Messung der Signal-Laufzeit $T_M$ über die Meßstrecke und der Messung der Signal-Laufzeit $T_R$ über die Referenzstrecke sehr schnell, beispielsweise innerhalb von 50 µs bis 100 µs durchgeführt werden kann und/oder wenn an die Meßgenauigkeit keine extrem hohen Anforderungen gestellt werden, so daß $t_1 = t'_1$ und $t_2 = t'_2$ gesetzt werden kann, läßt sich die obige Gleichung (2) unmittelbar nach $t_1 + t_2$ auflösen und in Gleichung (1) einsetzen, woraus man durch Auflösung der so erhaltenen Gleichung für die eigentlich interessierende, weil allein von der zu messenden Entfernung abhängende Größe $t_M$ erhält:

$$t_M = T_M - (T_R - t_R) \qquad (3)$$

$t_M$ ergibt sich also durch eine einfache Rechenoperation aus zwei sehr genau meßbaren Zeitabständen $T_M$ und $T_R$ und einer Gerätekonstanten $t_R$.

In all den Fällen, in denen die obige Voraussetzung nicht zulässig ist, weil entweder langsamer umgeschaltet und/oder eine extrem hohe Meßgenauigkeit angestrebt wird, kann man so vorgehen, daß man zumindest jede Signal-Laufzeitmessung über die Meßstrecke zwischen zwei Signal-Laufzeitmessungen über die Referenzstrecke einschließt. Für die beiden letzteren Signal-Laufzeitmessungen erhält man dann

$$T_{R1} = t_{11} + t_R + t_{21} \qquad (4)$$

und

$$T_{R2} = t_{12} + t_R + t_{22} \qquad (5)$$

wobei die zweiten Indizes andeuten sollen, daß sich $t_1$ und $t_2$ und damit auch $T_{R1}$ und $T_{R2}$ aufgrund von Schwankungserscheinungen in dem zwischen diesen beiden Messungen liegenden Zeitraum, in den auch die Messung der Signal-Laufzeit $T_M$ über die Meßstrecke fällt, geändert haben.

Da es immer möglich ist, die beiden Signal-Laufzeitwerte $T_{R1}$ und $T_{R2}$ so rasch hintereinander zu ermitteln, daß zwischenzeitliche Änderungen mit hinreichender Näherung als linear betrachtet werden können, genügt eine einfache Interpolation, um eine brauchbare Korrektur des in dieser Zeitspanne gewonnenen Signal-Laufzeitwertes $T_M$ durchführen zu können. Nimmt man an, daß die Messung von $T_M$ zeitlich genau in der Mitte zwischen den beiden Messungen von $T_{R1}$ bzw. $T_{R2}$ erfolgt, so gilt

$$t_1 + t_2 = \frac{(T_{R1} - t_R) + (T_{R2} - t_R)}{2} =$$

$$= \frac{T_{R1} + T_{R2}}{2} - t_R ; \qquad (6)$$

und man erhält in Analogie zur Gleichung (3)

$$t_M = T_M - \left(\frac{T_{R1} + T_{R2}}{2} - t_R\right) . \qquad (7)$$

Eine weitere Möglichkeit zur Erzielung einer sehr hohen Meßgenauigkeit bei gleichzeitiger Absenkung der Geschwindigkeit mit der zwischen Signal-Laufzeitmessungen über die Meßstrecke und Signal-Laufzeitmessungen über die Referenzstrecke umgeschaltet wird, besteht darin, alternierend, d.h. ineinander verschachtelt mehrere Messungen über die Meßstrecke und mehrere Messungen über die Referenzstrecke durchzuführen, aus jeder Gruppe der so gewonnenen Meßwerte $T_M$ bzw. $T_R$ die Mittelwerte zu bilden und diese Mittelwerte in die obigen Gleichungen (3) bzw. (7) einzusetzen. Bei dieser Möglichkeit wird allerdings vorausgesetzt, daß sich die Einflußgrößen entweder genügend langsam oder linear ändern.

Eine weitere Voraussetzung dafür, daß das erfindungsgemäße Entfernungsmeßverfahren zu sehr genauen Meßergebnissen führt, liegt darin, daß $t_R$ tatsächlich als über lange Zeiträume hinweg unveränderliche Gerätekonstante betrachtet werden kann. Dies bedeutet, daß die Länge des geräteinternen Referenzlichtweges unveränderlich sein muß. Dies läßt sich am einfachsten dadurch erreichen, daß man bei den Signal-Laufzeitmessungen über die Referenzstrecke Lichtimpulse vom Lichtweg-Umschalter im wesentlichen über eine Lichtleitfaser zum Empfänger lenkt, wobei in diesen Lichtweg allenfalls noch ein optischer Dämpfer eingeschaltet sein kann. Die Länge einer solchen Lichtleitfaser ist zwar temperaturabhängig, doch ist es beispielsweise möglich, die Temperatur im Geräteinneren fortlaufend zu messen und mit Hilfe dieses Meßwertes eine Korrektur von $t_R$ durchzuführen.

Vorzugsweise wird jedoch die Länge der den Referenzlichtweg im wesentlichen bildenden Lichtleitfaser so kurz gewählt, daß ihre Längenänderung auch bei großen Temperaturschwankungen unterhalb der angestrebten Meßgenauigkeit liegt.

Verwendet man die Mittelwerte mehrerer Signal-Laufzeitmessungen über die Meß- bzw. die Referenzstrecke zur Berechnung eines einzigen Entfernungsmeßwertes, so besteht eine weitere, zur Erzielung einer sehr hohen Meßgenauigkeit beitragende Maßnahme darin, die Trigger-Signale für den Sender zeitlich so zu legen, daß die alternierenden Meß- und Referenzlichtimpulse am Empfänger möglichst genau periodisch eintreffen. Dies ist dadurch erreichbar, daß man die Trigger-Zeitpunkte für die Meßlichtimpulse nach einem ersten, zur ungefähren Entfernungsbestimmung dienenden Meßlichtimpuls, dessen Laufzeit ansonsten nicht weiter verwendet wird, aufgrund des ungefähren Entfernungsmeßwertes gegen die Trigger-Zeitpunkte für die Referenzlichtimpulse entsprechend der momentanen Länge des Meßlichtweges verschiebt, wobei diese Länge für die Zeit, in der die zu einem Mittelwert zusammenzufassenden Laufzeit-Meßergebnisse gewonnen werden, ohnehin konstant sein muß.

Dieser möglichst periodische Betrieb der Empfängerseite eines Entfernungsmeßgerätes ist deshalb besonders vorteilhaft, weil die die Lichtimpulse im Empfangskanal weiterverarbeitenden Analogschaltungen, wie alle Analogschaltungen die Eigenschaft besitzen, daß die Größe des von ihnen auf das zu verarbeitende Meßsignal aufgeprägten Fehlers vom Zeitabstand zwischen zwei aufeinanderfolgenden gleichartigen Signalverarbeitungsvorgängen abhängt. Durch die Periodizität der Ansteuerung wird nun erreicht, daß diese Fehler mit derselben Größe in die Laufzeitwerte sowohl der Meßlichtimpulse als auch der zugehörigen Referenzlichtimpulse eingehen und sich somit bei der nachfolgenden Differenzbildung herausheben.

Darüber hinaus findet in der Zeitmeßvorrichtung eines hier in Rede stehenden Entfernungsmeßgerätes im allgemeinen ein Zeitbasissignal Verwendung, das an den verschiedensten Stellen zum Einsatz kommt und daher unvermeidlicherweise auf praktisch allen Leitungen als, wenn auch sehr kleines, periodisch schwankendes Störsignal vorhanden ist.

Betreibt man nun die Anordnung nicht mit einer beliebigen Periodizität, sondern mit einer Folgefrequenz, die ein ganzzahliges Vielfaches der Frequenz des Zeitbasissignals beträgt, so gehen auch die durch das Zeitbasissignal verursachten Störspannungen in die Analogsignale mit gleicher Amplitude ein und fallen daher bei den nachfolgenden Differenzbildungen wieder heraus.

Wie bereits erwähnt, ist eine wesentliche Voraussetzung des erfindungsgemäßen Verfahrens, daß dafür gesorgt wird, daß in die gemessenen Signal-Laufzeitwerte $T_M$ bzw. $T_R$ für zusammengehörige Meß- bzw. Referenzlichtimpulse die Zeiten $t_1$ und $t_2$, in denen das jeweilige Signal in elektrischer Form vorliegt und die auch die für das Umsetzen sowohl des elektrischen Signals in ein optisches Signal als auch des optischen Signals in die elektrische Form erforderlichen Ansprechzeiten enthalten, in gleicher Weise eingehen.

Zur Erfüllung dieser Bedingung bei der Erfindung sind in Abhängigkeit von der Art des jeweils verwendeten Senders zwei bevorzugte Lösungswege vorgesehen.

Die eine Senderart, deren typischer Vertreter eine Laser-Diode ist, zeichnet sich dadurch aus, daß die Reaktionszeit, die zwischen der Zuführung eines Trigger-Signals zum Sender und der Erzeugung eines Lichtimpulses vergeht, zumindest für die kurzen Zeiträume, die für die Durchführung der zu einem Entfernungsmeßwert beitragenden Signal-Laufzeitmessungen benötigt werden, mit ausreichend guter Genauigkeit reproduzierbar ist, wenn man für eine geeignete konstante Versorgungsspannung der Laser-Diode sorgt.

Diese Reproduzierbarkeit der Reaktionszeit des Senders ermöglicht es, als Start-Signal bzw. als Start-Vorbereitungssignal für die Zeitmeßschaltung sowohl bei den Meßlichtimpulsen als auch bei den Referenzlichtimpulsen das vom Trigger-Generator abgegebene Trigger-Signal zu verwenden, das dem Sender vorzugsweise um eine vorbestimmte Verzögerung τ später als der Zeitmeßschaltung zugeführt wird.

In diesem Fall, in dem die Zeitmessung vor der Erzeugung des Lichtimpulses gestartet wird, ist also die in den obigen Gleichungen auftretende Signallaufzeit $t_1$ positiv und umfaßt im wesentlichen die zusätzliche Verzögerungszeit τ und die Ansprechverzögerung des Senders.

Beide Zeiten sind hinsichtlich ihrer mittelfristigen Konstanz und langfristigen Driftfreiheit völlig unkritisch, da davon ausgegangen werden kann, daß sie sich beide in dem kurzen, für die Durchführung der Messungen für einen Entfernungsmeßwert benötigten Zeitraum entweder gar nicht oder allenfalls linear ändern, wobei letzteres durch eine entsprechende Interpolation berücksichtigt werden kann.

Ein wesentlicher Vorteil der zusätzlichen, elektronisch erzeugten Verzögerung $\tau$ besteht darin, daß sie so groß gewählt werden kann, daß der Abstand zwischen Start- und Stop-Signal sowohl bei den Messungen über die möglichst kurze Referenzstrecke als auch bei der Ausmessung sehr kurzer Entfernungen immer groß genug ist, um auch von einer einfach aufgebauten Zeitmeßschaltung ohne weiteres gemessen werden zu können.

Ein weiterer Vorteil des Verzögerungsgliedes ist darin zu sehen, daß der Start jeder Signal-Laufzeitmessung, der die zeitlich exakte Erfassung einer Flanke eines im allgemeinen impulsförmigen Signals erforderlich macht, in einem Zeitraum stattfindet, in dem der Sender das Trigger-Signal noch nicht erhalten hat. Der Sender reagiert nämlich auf dieses Trigger-Signal mit der Erzeugung eines sehr schnellen und vergleichweise großen Stromstoßes durch die Sendediode, so daß sehr kräftige Störsignale erzeugt werden, die es außerordentlich schwierig machen würden, einen in diesen Zeitraum fallenden Startzeitpunkt der Signal-Laufzeitmessung zeitlich genau festzulegen.

Bei einem Verfahren, bei dem jede Signal-Laufzeitmessung durch das auch dem Sender zugeführte, mit dem Zeitbasissignal nicht korrelierte Trigger-Signal gestartet wird, d.h. bei völlig freilaufendem Zeitbasissignal ist es erforderlich, zur Ermittlung einer jeden Signallaufzeit eine vollständige dreiteilige Zeitmessung durchzuführen, d.h. mit einer beispielsweise als Zeit/Amplituden-Wandlerschaltung aufgebauten Analogmeßschaltung als ersten Feinmeßwert den Zeitabstand zu messen, den das Triggersignal von einer definierten Flanke des Zeitbasissignals aufweist, als zweiten Feinmeßwert mit derselben Analogmeßvorrichtung den Zeitabstand zu messen, den das jeweilige nach Eintreffen des Lichtimpulses beim Empfänger zum Anhalten der Zeitmessung erzeugte zeitsignifikante Stopsignal von einer definierten Flanke des Zeitbasissignals besitzt und als Grobmeßwert die Perioden des Zeitbasissignals abzuzählen, die zwischen den beiden ebengenannten Flanken liegen. Aus diesen drei Meßwerten kann dann die Laufzeit eines Einzelsignals berechnet werden, so daß also zur Ermittlung der Signal-Laufzeitdifferenz eines Meßlichtimpulses und eines Referenzlichtimpulses vier Feinmeßwert- und zwei Grobmeßwertbildungen erforderlich sind.

Neben dem erhöhten meßtechnischen Aufwand ergibt sich dabei der Nachteil, daß die Analogmeßvorrichtung und der gesamte Meßkanal nicht mit konstanter Frequenz betrieben werden können, weil die auszumessenden Laufzeiten das interessierende Meßergebnis enthalten und damit veränderlich sind und die Analogmeßvorrichtung bei einer dreiteiligen Zeitmessung im allgemeinen in kürzeren Zeitabständen betrieben wird als von einer dreiteiligen Zeitmessung zur nächsten. Dieser aperiodische Betrieb des Meßkanals kann aber, wie bereits erwähnt, eine Verschlechterung der Genauigkeit der so erzielten Meßergebnisse zur Folge haben.

Eine besonders bevorzugte Variante des erfindungsgemäßen Verfahrens bietet demgegenüber die Möglichkeit, die Trigger-Signale mit dem Zeitbasissignal phasenstarr korreliert zu erzeugen. In diesem Fall dient das Triggersignal nicht mehr als eigentliches Start-Signal der Signal-Laufzeitmessung sondern nur noch als Vorbereitungssignal für eine allenfalls erforderliche Grobzeitmessung, die durch Abzählen der Flanken des Zeitbasissignals erfolgt und mit einer in einer definierten Korrelation mit dem Triggersignal stehenden, beispielsweise mit der 5-ten auf das Trigger-Signal folgenden Flanke des Zeitbasissignals beginnt. Es genügt also, unter Wegfall der oben beschriebenen jeweiligen ersten Feinmeßwertbildung für einen Entfernungsmeßwert nur den Grobmeßwert für die Signal-Laufzeit wenigstens eines Meßlichtimpulses und, falls dieser nicht als Gerätekonstante betrachtet werden kann, den Grobmeßwert für die Signal-Laufzeit eines Referenzlichtimpulses sowie die «zweiten» Feinmeßwerte für die Signal-Laufzeiten aller Lichtimpulse zu ermitteln, um hieraus die gesuchte Signal-Laufzeitdifferenz mit der Genauigkeit, mit der die Periode des Zeitbasissignals konstant und bekannt ist, zu erhalten. Durch den Wegfall der «vorderen» Feinmeßwertbildungen ist es möglich, durch eine entsprechende Wahl der Zeitpunkte, in denen die Trigger-Signale erzeugt werden, die Lichtimpulse in der oben beschriebenen Weise am Empfänger in strenger Periodizität zu erhalten.

Die andere Senderart, deren typischer Vertreter ein Gas- bzw. Festkörper-Laser ist, besitzt dagegen die Eigenschaft, daß die Reaktionszeit von Lichtimpuls zu Lichtimpuls auch dann, wenn die betreffenden Lichtimpulse sehr schnell hintereinander erzeugt werden, in so erheblichem Maße schwanken kann, daß ein Start der Signal-Laufzeitmessung durch das Trigger-Signal zu untragbaren Meßfehlern führen würde. Daher wird im Rahmen des der Erfindung zugrundeliegenden Konzeptes für derartige Sender der Start der Signal-Laufzeitmessung sowohl für jeden Meßlichtimpuls als auch für jeden Referenzlichtimpuls mit Hilfe des Ausgangssignals eines Hilfsempfängers bewirkt, dem über einen geräteinternen Start-Lichtweg ein ausgekoppelter Teil des jeweiligen Lichtimpulses zugeführt wird und der hierauf ein zeitsignifikantes Ausgangssignal abgibt.

In diesem Fall, in welchem die Zeitmessung nach der Erzeugung des jeweiligen Lichtimpulses gestartet wird, ist die Zeit $t_1$ negativ und enthält die Laufzeit des Teil-Lichtimpulses vom Sender zum Hilfsempfänger sowie die Reaktionszeit des Hilfsempfängers. Diese Teile von $t_1$ sind aber wieder für die kurzen zu betrachtenden Zeiträume kon-

stant oder zumindest linear veränderlich, so daß wiederum die obigen Gleichungen Verwendung finden können. Entscheidend ist, daß auch hier sämtliche möglichen Verzögerungen in gleicher Weise zumindest in die Mittelwerte der Signal-Laufzeiten von Meßlichtimpulsen und Referenzlichtimpulsen eingehen und daher bei der entsprechenden Differenzbildung herausfallen.

Eine phasenstarre Korrelation zwischen den Triggersignalen und dem Zeitbasissignal der Zeitmeßschaltung ist hier wegen des schwankenden Reaktionsverhaltens des Senders nicht sinnvoll. Aus diesem Grund muß zumindest für jede Signal-Laufzeitmessung für einen Meßlichtimpuls eine dreiteilige, zu zwei Feinmeßwerten und einem Grobmeßwert führende Zeitmessung durchgeführt werden, während für die Referenzlichtimpulse unter Umständen nur die Feinmeßwerte bestimmt werden müssen, wenn der Grobmeßwert als Gerätekonstante betrachtet werden kann. Insgesamt ergibt sich hier eine etwas geringere absolute Meßgenauigkeit als bei den Sendern der ersten Art, was aber durch die wesentlich höhere Leistung und damit erheblich vergrößerte maximale Reichweite dieser Sender zweiter Art bezüglich der relativen Genauigkeit mehr als ausgeglichen wird.

Um auch beliebig kurze Entfernungen messen und insbesondere eine kurze Referenzstrecke verwenden zu können, wird bei der mit einem Hilfsempfänger arbeitenden Version eines erfindungsgemäßen Entfernungsmeßgerätes vorzugsweise eine Zeitmeßvorrichtung verwendet, die hinsichtlich der Feinmeßwertbildung das Start- und das Stop-Signal für die Signal-Laufzeitmessung jeweils in einem eigenen Analog-Meßkanal verarbeitet. Eine derartige Zeitmeßvorrichtung ist beispielsweise in der DE-OS 2 842 450 beschrieben.

Dies bietet den Vorteil, daß auch hier wieder die Trigger-Impulse zeitlich so gesteuert werden können, daß die Lichtimpulse an jedem der Empfänger periodisch eintreffen, so daß die durch die analogen Signalverarbeitungskanäle eingeführten Fehler klein gehalten werden. Das schwankende Reaktionsverhalten des Senders läßt zwar eine hochgenaue Periodizität nicht zu, doch bleiben die Abweichungen bei der ohnehin begrenzten maximalen Lichtimpuls-Folgefrequenz derartiger Sender im Bereich von einigen Promille oder weniger, so daß sich durch die zeitliche Steuerung der Triggersignale aus den bereits oben genannten Gründen eine wesentliche Verbesserung der Meßgenauigkeit erzielen läßt.

Die Erfindung wird im folgenden anhand von Ausführungsbeispielen unter Bezugnahme auf die Zeichnung beschrieben; in dieser zeigt:

Fig. 1 eine erste Ausführungsform,
Fig. 2 eine zweite Ausführungsform,
Fig. 3 eine dritte Ausführungsform,
Fig. 4 eine vierte Ausführungsform und
Fig. 5 eine fünfte Ausführungsform eines erfindungsgemäßen Entfernungsmeßgerätes.

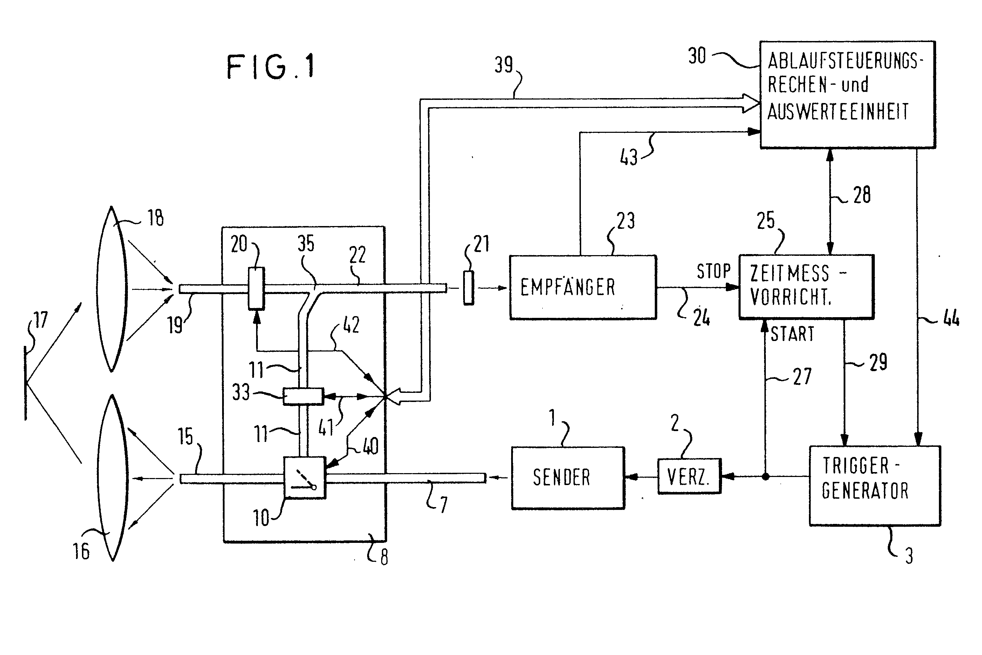

Die in Fig. 1 wiedergegebene Ausführungsform eines nach dem Prinzip der Lichtimpuls-Laufzeitmessung arbeitenden, erfindungsgemäßen Entfernungsmeßgerätes besitzt einen Sender 1 der ersten Art, der eine Laserdiode und eine die Laserdiode mit Energie versorgende Schaltungsanordnung umfaßt, die wesentlichen aus einem «langsam» aufladbaren Energiespeicher in Form einer Kapazität und einem steuerbaren elektronischen Schalter besteht, der dazu dient, die im Energiespeicher angesammelte Energie schnell über die Sendediode zur Erzeugung eines Laser-Lichtimpulses zu entladen.

Die Ansteuerung dieses Schalters erfolgt durch einen Triggersignal-Generator 3, dessen Ausgangssignal wegen des zumindest innerhalb kurzer Zeiträume gut reproduzierbaren Ansprechverhaltens der Laser-Diode gleichzeitig auch als Start- bzw. Startvorbereitungs-Signal der jeweiligen Signal-Laufzeitmessung dienen kann. Zwischen den Triggersignal-Generator 3 und den Sender 1 ist ein Verzögerungsglied 2 geschaltet, das einerseits dafür sorgt, daß beispielsweise auch beim Ausmessen einer sehr kurzen Entfernung das Stopsignal für die Signal-Laufzeitmessung einen genügend großen zeitlichen Abstand vom Startsignal aufweist, sodaß diese beiden Signale von ein und demselben Zeitmeßkanal ohne weiteres nacheinander verarbeitet werden können, und das andererseits bewirkt, daß die Signal-Laufzeitmessung vor dem Zeitpunkt und damit störungsfrei begonnen wird, in welchem der Sender auf das Trigger-Signal mit der Erzeugung eines sehr schnellen und vergleichsweise großen Stromstoßes durch die Sendediode reagiert, wobei sehr kräftige Störsignale erzeugt werden, die es außerordentlich schwierig machen würden, ein genau gleichzeitig mit oder kurz nach der Lichtimpuls-Erzeugung durch den Sender 1 abgegebenes Start-Signal für die Signal-Laufzeitmessung zeitlich exakt zu erfassen.

Die vom Sender 1 erzeugten Lichtimpulse werden über einen Sender-Lichtweg 7 einer optischen Schalt- und Dämpfungseinheit 8 zugeführt, die einen Lichtwegumschalter 10 enthält, der je nach seinem Schaltzustand einen aus dem Sender-Lichtweg 7 austretenden Lichtimpuls entweder in einen Sende-Meßlichtweg 15 oder in einen geräteinternen Referenzlichtweg 11 lenkt und dabei eine definierte Schwächung des Lichtes vornehmen kann.

Der Lichtwegumschalter 10 kann entweder von einer mechanisch beweglichen Spiegelvorrichtung oder von einem feststehenden Strahlenteiler gebildet werden, in dessen zwei abgehende Lichtwege jeweils ein Dämpfungsglied eingebaut ist, das zwischen einer sehr hohen (vorzugsweise unendlich hohen) und einer sehr kleinen Dämpfung veränderbar ist, wobei dann zur Erzielung der Umschaltfunktion die beiden Dämpfungsglieder gegensinnig angesteuert werden.

Die vom Lichtwegumschalter 10 in seiner Meßlichtstellung in den Sende-Meßlichtweg 15 eingespeisten Lichtimpulse werden zu einer Sendeoptik 16 weitergeleitet, die vereinfacht als einzelne Linse dargestellt ist und die Lichtimpulse zum Zielgegenstand 17 aussendet, dessen Entfernung gemessen werden soll.

Der vom Zielgegenstand 17 reflektierte Teil eines jeden Lichtimpulses wird von der in Fig. 1 ebenfalls schematisch als einzelne Linse dargestellten Empfangsoptik 18 über einen Empfangs-Meßlichtweg 19, einen in der optischen Schalt- und Dämpfungseinheit 8 enthaltenen, veränderbaren optischen Dämpfer 20 und einen Empfangslichtweg 22, der ein Interferenzfilter 21 enthält, einem Empfänger 23 zugeführt, der beispielsweise als lichtelektrischer Wandler eine Photodiode mit einer nachgeschalteten Verstärker- und Signalerzeugungsschaltung umfaßt, die dazu dient, ein von ihr beim Empfang eines Lichtimpulses erzeugtes Signal über eine Leitung 24 einer Zeitmeßvorrichtung 25 als Stop-Signal zuzuführen, um die von dieser Zeitmeßvorrichtung durchgeführte Signal-Laufzeitmessung für den betreffenden Lichtimpuls zu beenden. Diese Signal-Laufzeitmessung war zuvor, wie oben erwähnt, in Abhängigkeit von dem vom Triggersignal-Generator 3 abgegebenen Triggersignal begonnen worden, das der Zeitmeßvorrichtung 25 über die Leitung 27 als Start-Signal zuführbar ist.

Für den Fall, daß die Ausgangssignale des Triggersignal-Generators 3 mit einem in der Zeitmeßvorrichtung 25 erzeugten Zeitbasissignal synchronisiert werden sollen, ist eine Leitung 29 vorgesehen, durch die entsprechende Signale von der Zeitmeßvorrichtung 25 zum Triggersignal-Generator 3 übertragen werden können.

Die von der Zeitmeßvorrichtung 25 gewonnenen Zeitmeßergebnisse werden über Leitungen 28 einer zentralen Ablaufsteuerungs-, Rechen- und Auswerte-Einheit 30 zugeführt, die einerseits aus diesen Signal-Laufzeit-Meßwerten die korrigierten Entfernungsmeßwerte ermittelt und zur Anzeige bringt und die andererseits die Funktionsabläufe im gesamten Meßgerät steuert. Vorzugsweise kann diese Ablaufsteuerungs-, Rechen- und Auswerte-Einheit 30 einen Mikroprozessor umfassen.

Die vom Lichtwegumschalter 10 in seiner Referenzlichtstellung in den Referenzlichtweg 11 eingespeisten Lichtimpulse durchlaufen einen gegebenenfalls steuerbaren optischen Dämpfer 33 und werden an einer Verzweigungsstelle 35 in den zum Empfänger 23 führenden Teil 22 des Empfangslichtweges geleitet. Die auf diesem Weg vom Sender 1 zum Empfänger 23 laufenden Referenz-Lichtimpulse unterliegen senderseitig bezüglich des Triggersignals und empfängerseitig bis zur Erzeugung des Stop-Signals für die Zeitmeßvorrichtung 25 denselben Verzögerungs- bzw. Signalverarbeitungszeiten wie die Meßlichtimpulse, von denen sie sich im wesentlichen lediglich hinsichtlich der Länge des zwischen dem Lichtwegumschalter 10 und der Verzweigungsstelle 35 durchlaufenen Lichtweges unterscheiden. Da die Länge dieses Referenzlichtweges 11 und damit auch die für sein Durchlaufen benötigte Zeit sehr genau bekannt ist, können mit Hilfe der Signal-Laufzeitmessung über die Referenzstrecke die oben erwähnten, auch bei den Signal-Laufzeitmessungen über die Meßstrecke wirksamen Verzögerungs-und Signalverarbeitungszeiten durch eine Differenzbildung der jeweiligen Meßwerte eliminiert werden.

Grundsätzlich kann die optische Schalt- und Dämpfungseinheit 8 in der oben beschriebenen Weise mit beliebigen bekannten Schalt- und Dämpfungsvorrichtungen aufgebaut sein. Ein besonders vorteilhafter Aufbau einer solchen Schalt- und Dämpfungseinheit 8 ist jedoch in der auf einer gleichzeitig eingereichten deutschen Patentanmeldung basierenden DE-A-3 219 452 (entsprechend EP-A-0 066 889) mit dem Titel «Dynamik-Steuerungsanordnung für ein Entfernungsmeßgerät» beschrieben.

Ein Signalaustausch zwischen der optischen Schalt- und Dämpfungseinheit 8 und der Ablaufsteuerungs-, Rechen- und Auswerte-Einheit 30 erfolgt über die Leitung 39, die mehradrig oder bidirektional ausgebildet sein kann, so daß beispielsweise über die Leitung 40 die momentane Stellung des Lichtwegumschalters 10 betreffende Informationen an die Ablaufsteuerungs-, Rechen- und Auswerte-Schaltung 30 übermittelt und über die Leitungen 41 und 42 dem jeweiligen Betriebszustand angepaßte Befehlssignale von der Ablaufsteuerungs-, Rechen- und Auswerte-Einheit 30 an die optischen Dämpfer 20 bzw. 33 abgegeben werden können.

Zur Ermittlung der erforderlichen Dämpfung der Lichtimpulse und zur Anpassung der Amplituden der Referenzlichtimpulse an die der zugehörigen Meßlichtimpulse umfaßt der Empfänger 23 Komparatoren, die ihre Signale über die Leitung 43 an die zentrale Ablaufsteuerungs-, Rechen- und Auswerteeinheit 30 zur weiteren Verarbeitung übermitteln.

Die Zeitmeßschaltung 25 kann bei diesem Ausführungsbeispiel ebenso wie der Empfänger 23 vollständig einkanalig ausgebildet sein, d.h., daß alle analogen Feinzeitmessungen von ein und derselben Analogmeßvorrichtung durchgeführt werden, deren Signalverarbeitungszeiten einschließlich der Schwankungen und Drifterscheinungen sich aufgrund der Differenzbildung zwischen schnell hintereinander gewonnenen Meßlicht- und Referenzlicht-Signallaufzeiten herausheben. Eine hier bevorzugt zur Verwendung kommende Zeitmeßvorrichtung dieser Art ist der nicht vorveröffentlichten deutschen Patentanmeldung DE-A-3 215 847 entnehmbar.

Das in Fig. 1 dargestellte Entfernungsmeßgerät arbeitet in der Weise, daß der Lichtwegumschalter 10 periodisch zwischen Meßlichtstellung und Referenzlichtstellung abwechselt. In zeitlicher Abhängigkeit vom Schaltzustand des Lichtwegumschalters 10, über den sie vermittels der Leitungen 39, 40 Informationen erhält, steuert die zentrale Ablaufsteuerungs-, Rechen- und Auswerteeinheit 30 über die Leitung 44 den Triggersignal-Generator 3 so, daß er den Sender 1 in den richtigen Zeitpunkten veranlaßt, Lichtimpulse abzugeben, die aufgrund der jeweiligen momentanen Stellung des Lichtwegumschalters 10 entweder als Meß- oder als Referenzlichtimpulse weitergeleitet und dem Empfänger 23 mit einer entsprechenden Dämpfung zugeführt werden. Beim Anmessen eines neuen Zielgegenstandes 17 wird dabei zunächst mit einer Reihe von Versuchsmessungen die richtige Dämpfung ermittelt und, sobald diese feststeht, vorzugsweise eine Vielzahl von alternierenden Meß- und Referenzlichtimpulsen so schnell abgegeben, daß sich in dieser Zeit weder die Entfernung des Zielgegenstandes noch die in die Messungen eingehenden Signalverzögerungszeiten ändern. Aus den so gewonnenen Signal-Laufzeiten werden Mittelwerte gebildet und hieraus der gesuchte Entfernungsmeßwert berechnet.

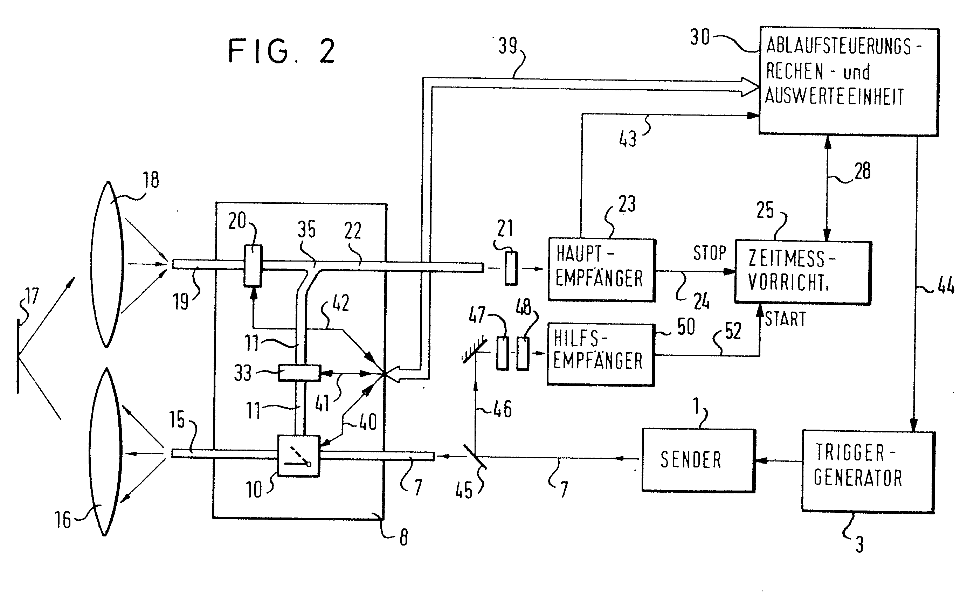

Das in Fig. 2 wiedergegebene Ausführungsbeispiel eines erfindungsgemäßen Entfernungsmeßgerätes stimmt in vielen Teilen, die auch alle mit denselben Bezugszeichen bezeichnet sind, mit dem Ausführungsbeispiel aus Fig. 1 überein.

Der wesentlichste Unterschied besteht darin, daß bei dem Entfernungsmeßgerät nach Fig. 2 als Sender 1 keine Laserdiode sondern ein Laser Verwendung findet, der einerseits aufgrund seiner wesentlich höheren Leistung die Ausmessung wesentlich größerer Entfernungen (von mehr als 10 km bis über 100 km) erlaubt, andererseits aber die Eigenschaft besitzt, daß seine Ansprechverzögerung auf das Triggersignal anders als bei der Laserdiode auch über sehr kurze Zeiträume hinweg nicht als konstant betrachtet werden kann. Vielmehr können bei einem solchen Laser auch bei sehr schneller Lichtimpulsfolge von Lichtimpuls zu Lichtimpuls Änderungen in der Ansprechzeit von bis zu mehreren Mikrosekunden auftreten, so daß hier etwas andere Signallaufzeiten gemessen werden müssen, wenn man eine hohe Meßgenauigkeit erzielen will. Die dazu erforderlichen Modifikationen bestehen darin, daß man der Zeitmeßvorrichtung 25 nicht mehr das Ausgangssignal des Triggersignal-Generators 3 als Start-Signal zuführt. Statt dessen ist im Sender-Lichtweg 7 ein Strahlenteiler vorgesehen, der hier von einem unter 45° gegen die optische Achse des Senderlichtweges 7 geneigten teildurchlässigen Spiegel 45 gebildet wird, der den größten Teil, z.B. 99% eines jeden vom Sender 1 emittierten Lichtimpulses geradlinig zur optischen Schalt- und Dämpfungseinheit 8 durchläßt und nur den restlichen kleinen Teil unter einem Winkel von 90° umlenkt und in einen geräteintern verlaufenden Hilfslichtweg 46 einspeist, der über ein Dämpfungsfilter 47 und ein Interferenzfilter 48 zu einem Hilfsempfänger 50 führt.

Dieser Hilfsempfänger 50 unterscheidet sich von dem die reflektierten Meßlichtimpulse bzw. die Referenzlichtimpulse erhaltenden Hauptempfänger 23 im wesentlichen dadurch, daß er als photoelektrischen Wandler keine aufwendige Avalanche-Diode sondern eine wesentlich kostengünstigere und ohne Hochspannungsversorgung auskommende PIN-Diode aufweist, deren im Vergleich zu einer Avalanche-Diode geringere Empfindlichkeit völlig ausreichend ist, da über den Hilfslichtweg 46 eine vergleichsweise große Helligkeit zur Verfügung steht.

Im übrigen enthält der Hilfsempfänger 50 ebenfalls Verstärker- und Verarbeitungsschaltungen, die es erlauben, ein mit dem Eintreffen eines Lichtimpulses zeitlich exakt korreliertes, zeitsignifikantes Ausgangssignal zu erzeugen, das über die Leitung 52 der Zeitmeßvorrichtung 25 als Start-Signal zugeführt wird.

In diesem Fall wird als Zeitmeßvorrichtung 25 vorzugsweise eine Anordnung verwendet, bei der die Feinmeßwerte für die hier mit dem Zeitbasissignal nicht mehr korrelierten Start-Signale von einer anderen Analogmeßvorrichtung ermittelt werden, als die Feinmeßwerte der Stop-Signale. Eine derartige, sehr genaue Meßergebnisse ermöglichende Zeitmeßanordnung ist beispielsweise der DE-A-2 842 450 entnehmbar.

Durch den Einsatz von zwei getrennten Analogmeßkanälen wird die Verwendung eines kurzen Referenzlichtweges 11 sowie das Ausmessen beliebig kurzer Entfernungen ermöglicht, da keine Zeitkonkurrenz zwischen Start- und Stop-Signalen auftreten kann.

Obwohl diese Variante eines erfindungsgemäßen Entfernungsmeßgerätes sowohl im optischen Teil als auch in der Zeitmeßvorrichtung 25 zwei voneinander getrennte «Kanäle», nämlich die Meßstrecke 7, 15, 17, 19, 22 bzw. die Referenzstrecke 7, 11, 22 einerseits und den Hilfslichtweg 46 andererseits sowie die beiden Analogmeßvorrichtungen zur Bildung der beiden jeweils zu einer Signal-Laufzeitmessung gehörenden Feinmeßwerte aufweist, ist ihre Funktionsweise und Meßgenauigkeit die einer einkanaligen Anordnung.

Bei einer echt zweikanaligen Anordnung, wie sie beispielsweise in der DE-A-2 723 835 beschrieben ist, wird von jedem Meßlichtimpuls ein Referenzlichtteil abgezweigt und einem eigenen Empfänger zugeführt, dessen Ausgangssignal zum Start einer Laufzeitmessung dient, die durch das Ausgangssignal eines anderen Empfängers beendet wird, der den vom Zielgegenstand reflektierten Meßlichtimpuls erhält. Da bei kurzen Meßentfernungen Start- und Stopsignal für die Laufzeitmessung sehr schnell aufeinanderfolgen können, wird die erforderliche Feinzeitmessung jeweils mit einer eigenen Analogmeßvorrichtung durchgeführt. Es erfolgt hier nur eine einzige Art von Lichtimpuls-Laufzeitmessungen, nämlich die Laufzeitmessungen für die Meßlichtimpulse, und der sich jeweils ergebende Meßwert enthält neben der gesuchten Entfernung auch noch die Differenz der Reaktions- und Signalverarbeitungszeiten der beiden Kanäle, wobei diese Differenz zeitlichen Schwankungen und Drifterscheinungen unterliegt. Zur Beseitigung dieser Fehlerquelle wird die sogenannte Nullablage der beiden Kanäle gemessen, d.h. es werden beispielsweise die beiden den Empfangsphotodioden nachgeschalteten Schwingkreise exakt gleichzeitig elektrisch getriggert, und die sich dabei ergebende Laufzeitdifferenz gemessen und von dem zuvor gewonnenen Meßlichtimpuls-Laufzeitwert abgezogen. Dabei werden aber die stark temperaturabhängigen Ansprechverzögerungen der Photodioden nicht erfaßt.

Demgegenüber werden auch bei der zweiten Variante des erfindungsgemäßen Verfahrens zwei Arten von Lichtimpuls-Laufzeitmessungen, nämlich Signal-Laufzeitmessungen über die Meßstrecke 7, 15, 17, 19, 22 und Signal-Laufzeitmessungen über die Referenzstrecke 7, 11, 22 nacheinander durchgeführt, wobei bei jeder dieser Messungen sowohl die beiden optischen «Kanäle» als auch die zwei Analogmeßschaltungen so zum Einsatz kommen, daß sämtliche auftretenden Verzögerungs- und Signalverarbeitungszeiten in gleicher Weise in die beiden Arten von Messungen eingehen. Dadurch, daß diese Messungen so rasch hintereinander folgen, daß sich die eben genannten «parasitären» Zeiten entweder gar nicht oder allenfalls linear verändern, fallen letztere bei den zur Ermittlung eines einzigen Entfernungsmeßwertes durchgeführten Differenz- und Mittelwertbildungen vollständig heraus. Diese zweite Ausführungsform stellt also ein quasi einkanaliges System dar, bei dem insbesondere die Reproduzierbarkeit des Ansprechverhaltens des Senders keine Rolle spielt und das in seiner Funktion und Meßgenauigkeit dem rein einkanaligen System der Ausführungsform nach Fig. 1 weitgehend entspricht.

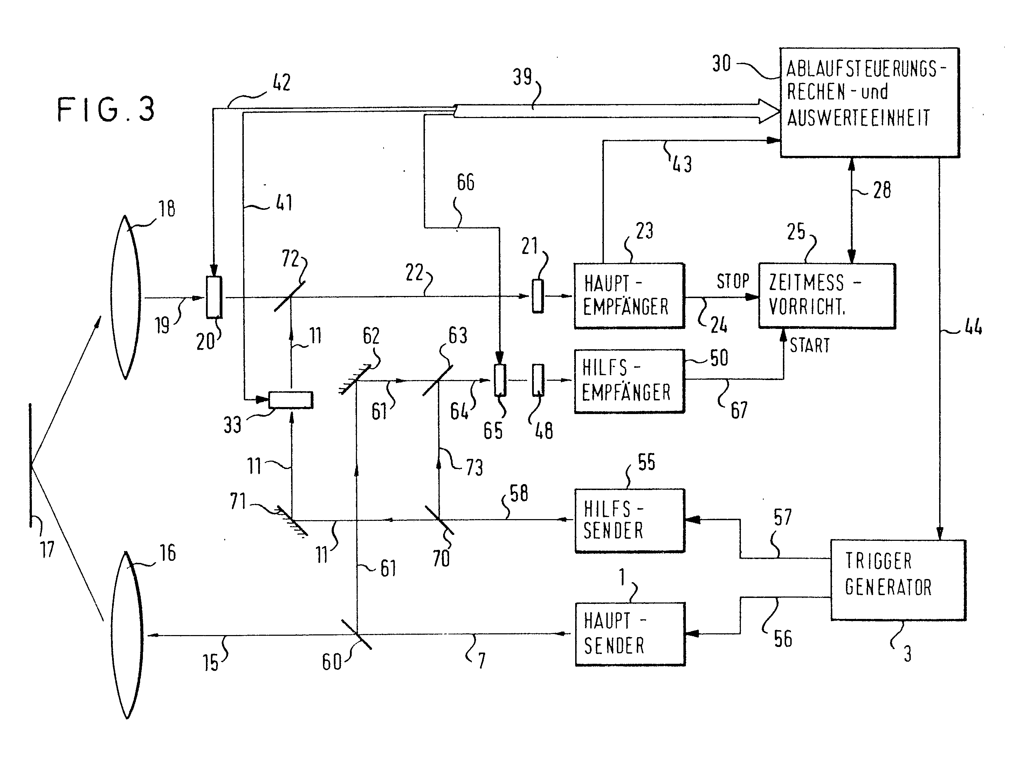

Bei einer dritten, in Fig. 3 dargestellten Variante sind die Lichtwege nicht mehr als Lichtleitfasern, sondern als freie Strahlengänge dargestellt, die lediglich durch ihren jeweiligen Zentralstrahl symbolisiert werden. Diese Variante umfaßt neben dem zur Erzeugung der Meßlichtimpulse dienenden Hauptsender 1 einen Hilfssender 55, der eine wesentlich geringere Leistung besitzen kann, da er nur zur Erzeugung der Referenzlichtimpulse dient. Der Triggersignal-Generator 3 steuert nach Maßgabe der ihm über die Leitung 44 zugeführten Befehlssignale die beiden Sender 1 und 55 über die Leitungen 56 bzw. 57 wechselweise an, so daß einmal der Hauptsender 1 einen Meßlichtimpuls über die Meßstrecke 7, 15, 17, 19, 22 zum Hauptempfänger 23 und einmal der Hilfssender 55 einen Referenzlichtimpuls über die Referenzstrecke 58, 11, 22 zum Hauptempfänger 23 sendet.

Eine Korrelation der Triggersignale mit einem Zeitbasissignal der Zeitmeßvorrichtung 25 findet nicht statt und insbesondere als Hauptsender 1 kann ein Laser mit stark schwankendem Ansprechverhalten verwendet werden.

Eine Signal-Laufzeitmessung über die Meßstrecke 7, 15, 17, 19, 22 erfolgt in der Weise, daß der Hauptsender 1 aufgrund eines entsprechenden Triggersignals einen Meßlichtimpuls erzeugt, dessen Hauptteil einen im Ausgangslichtweg 7 des Hauptsenders 1 angeordneten ersten Strahlenteiler 60, beispielsweise einen teildurchlässigen Spiegel geradlinig durchläuft um zum Zielgegenstand emittiert zu werden, während ein kleiner Teil des Meßlichtimpulses vom ersten Strahlenteiler 60 in einen ersten Hilfslichtweg 61 eingespeist wird und über einen total reflektierenden Umlenkspiegel 62, einen teildurchlässigen Einkoppelspiegel 63, einen Lichtwegabschnitt 64, eine steuerbare Dämpfungsvorrichtung 65 und ein Interferenzfilter 48 zum Hilfsempfänger 50 gelangt.

Die Dämpfungsvorrichtung 65 wird von der Ablaufsteuerungs-, Rechen- und Auswerteeinheit 30 über eine Leitung 66 so gesteuert, daß die Amplitude bzw. Helligkeit der zum Hilfsempfänger 50 gelangenden Lichtimpulse immer in etwa gleich groß ist.

Beim Empfang des vom Meßlichtimpuls abgezweigten Teils gibt der Hilfsempfänger 50 ein zeitsignifikantes Signal ab, das der Zeitmeßvorrichtung 25 über die Leitung 67 als Start-Signal für die in Rede stehende Signal-Laufzeitmessung zugeführt wird. Da dieses Start-Signal mit dem Zeitbasissignal der Zeitmeßvorrichtung 25 in keiner Weise korreliert ist, kann mit ihm nicht lediglich eine den Grobmeßwert für die Signal-Laufzeit liefernde Abzählung der Perioden des Zeitbasissignals begonnen werden, sondern es muß auch durch eine Analogmessung als erster Feinmeßwert der Zeitabstand dieses Start-Signals von einer nachfolgenden definierten Flanke des Zeitbasissignals ermittelt werden.

Beendet wird diese Signal-Laufzeitmessung über die Meßstrecke 7, 15, 17, 19, 22 durch das Ausgangssignal, das der Hauptempfänger 23 über die Leitung 24 an die Zeitmeßvorrichtung 25 abgibt, wenn er den vom Zielgegenstand 17 zurückkommenden Meßlichtimpuls erhält. Da dieses Stop-Signal bei kurzen Meßentfernungen sehr rasch auf das Start-Signal folgen kann, wird der den zweiten Feinmeßwert dieser Signal-Laufzeitmessung bildende Zeitabstand des Stop-Signals von einer nachfolgenden definierten Flanke des Zeitbasissignals mittels einer zweiten in der Zeitmeßvorrichtung 25 enthaltenen Analogmeßschaltung gemessen.

In diese Signal-Laufzeitmessung gehen an parasitären Größen nur die Reaktionszeiten der beiden Empfänger 23 und 50 sowie die Differenz der Signalverarbeitungszeiten in den beiden Analogmeßschaltungen der Zeitmeßvorrichtung 25, nicht aber die Reaktionszeit des Hauptsenders 1 ein.

Gleiches gilt für die Signal-Laufzeitmessungen über die Referenzstrecke 58, 11, 22, für die vom Hilfssender 55 Lichtimpulse emittiert werden, deren Hauptteil einen zweiten Strahlenteiler 70 geradlinig durchläuft um in den Referenzlichtweg 11 zu gelangen, der einen total reflektierenden Umlenkspiegel 71 und eine steuerbare Dämpfungsvorrichtung 33 umfaßt und über einen teildurchlässigen Einkoppelspiegel 72 mit dem zum Hauptempfänger 23 führenden Empfangslichtweg 22 vereinigt wird.

Der vom zweiten Strahlenteiler 70 ausgekoppelte kleinere Teil eines jeden Referenzlichtimpulses wird in einen zweiten Hilfslichtweg 73 eingespeist, der über den teildurchlässigen Einkoppelspiegel 63 mit dem zum Hilfsempfänger 50 führenden Lichtwegabschnitt 64 vereinigt wird. Auch bei dieser Signal-Laufzeitmessung dient das Ausgangssignal des Hilfsempfängers 50 als Start-Signal und das Ausgangssignal des Hauptempfängers als Stop-Signal für die Zeitmeßvorrichtung 25, die wiederum eine dreiteilige, d.h. eine zwei Feinmeßwerte und einen Grobmeßwert umfassende Zeitmessung vornimmt, wobei, wie bereits erwähnt, der sich ergebende Gesamtmeßwert von der Reaktionszeit des Hilfssenders 55 unabhängig ist und im übrigen dieselben parasitären Größen enthält, wie der zuvor gewonnene Gesamtmeßwert der Signal-Laufzeitmessung über die Meßstrecke. Durch eine Subtraktion dieser beiden Signal-Laufzeitwerte bzw. von Mittelwerten, die aus mehreren solchen Signal-Laufzeitwerten gebildet sind, können die parasitären Größen vollständig eliminiert werden, wenn die Messungen so rasch hintereinander durchgeführt werden, daß in dem betreffenden Zeitraum keine Änderungen dieser parasitären Größen auftreten.

Diese Bedingung ist bei dieser Variante besonders gut zu erfüllen, da die Verwendung von zwei getrennten Sendern 1 und 55 und der Wegfall von mechanisch beweglichen Lichtweg-Umschaltern eine besonders hohe Lichtimpulsfolgefrequenz in der Größenordnung von 20 kHz erlaubt.

Dadurch, daß man den Hilfssender 55 entsprechend häufiger triggert als den Hauptsender 1 läßt sich überdies ein weitgehend periodischer Betrieb sowohl des Hilfsempfängers 50 und des Hauptempfängers 23 als auch der beiden in der Zeitmeßvorrichtung 25 enthaltenen Analogmeßschaltungen erreichen, was zu der bereits erwähnten wesentlichen Steigerung der Meßgenauigkeit führt.

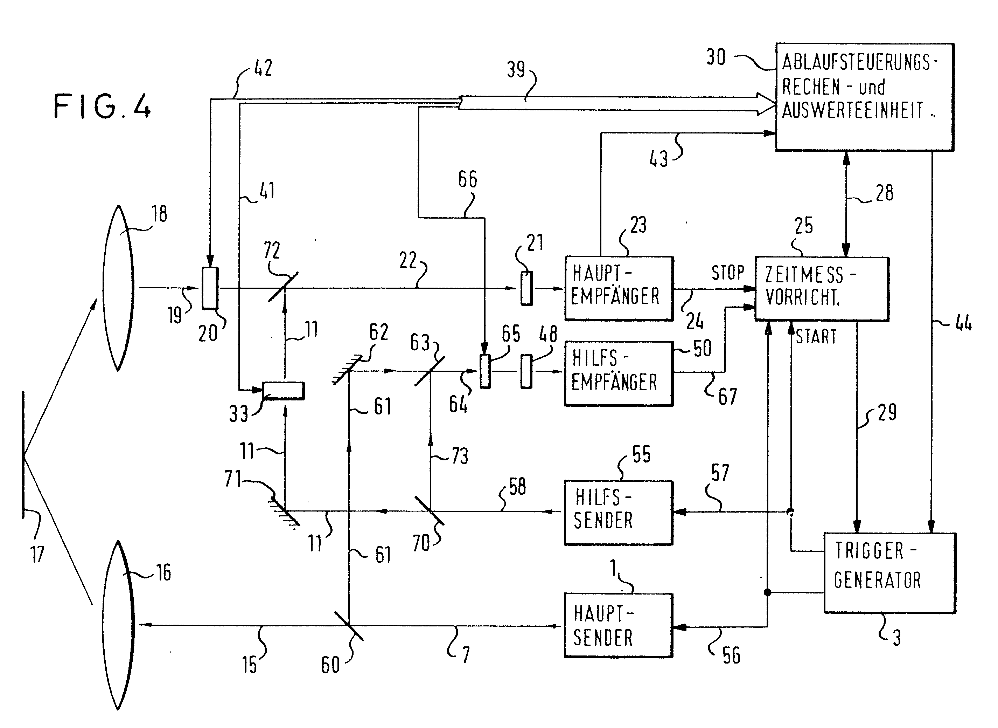

Die in Fig. 4 dargestellte Variante ist fast identisch zu der Variante gemäß Fig. 3 aufgebaut. Sie unterscheidet sich von jener hauptsächlich in ihrer Betriebsweise, die durch eine andere Ansteuerung der Zeitmeßvorrichtung 25 ermöglicht wird.

Über die Leitung 29 werden hier wieder Synchronisationssignale von der Zeitmeßvorrichtung 25 an den Triggersignal-Generator 3 geliefert, so daß dessen Trigger-Signale streng mit dem Zeitbasissignal synchronisiert sind. Da hier als Sender 1 bzw. 55 nur Laser-Dioden mit einem kurzfristig gut reproduzierbaren Ansprechverhalten zur Verwendung kommen, können die Signal-Laufzeitmessungen sowohl über die Meßstrecke 7, 15, 17, 19, 22 als auch über die Referenzstrecke 58, 11, 22 in Abhängigkeit von dem zugehörigen Triggersignal unter Verzicht auf die oben im Zusammenhang mit Fig. 3 beschriebene erste Feinmeßwertbildung allein mit der Grobmeßwertbildung begonnen werden, was in Fig. 4 dadurch symbolisiert ist, daß die Triggerleitungen 56, 57 mit dem Start-Eingang der Zeitmeßvorrichtung 25 verbunden sind.

Beendet wird dann die jeweilige Signal-Laufzeitmessung mit dem Ausgangssignal des Hauptempfängers 23, wobei hier wieder eine Feinmeßwertbildung stattfindet.

Allerdings gehen in die so erhaltenen Signal-Laufzeitwerte auch die Reaktionszeiten des Hauptsenders 1 bzw. des Hilfssenders 55 mit ein, so daß eine Eliminierung aller parasitären Größen durch eine einfache Differenzbildung zwischen einem Signal-Laufzeitwert über die Meßstrecke 7, 15, 17, 19, 22 und einem Signallaufzeitwert über die Referenzstrecke 58, 11, 22 bzw. zwischen entsprechenden Mittelwerten nicht vollständig möglich ist.

Um dieses Ziel zu erreichen, müssen hier noch zwei weitere Signal-Laufzeitmessungen über die beiden Hilfslichtwege 7, 61, 64 bzw. 58, 73, 64 durchgeführt werden. Diese Signal-Laufzeitmessungen werden ebenso als zweiteilige Zeitmessungen ausgeführt, wie dies oben über die Meßund die Referenzstrecke beschrieben wurde. In die Differenz der beiden hier in Rede stehenden Signal-Laufzeitmessungen gehen wiederum unter anderem die Reaktionszeiten des Hauptsenders 1 und des Hilfssenders 55 ein, so daß durch eine Differenzbildung zwischen den genannten Signal-Laufzeitdifferenzen alle parasitären Zeiten eliminiert werden können.

Um die Signal-Laufzeitmessungen über die Meß- und Referenzstrecke von denen über den ersten bzw. zweiten Hilfslichtweg 61 bzw. 73 entkoppeln zu können, werden die Strahlenteiler 60 und 70 in Verbindung mit den steuerbaren Dämpfungsvorrichtungen 20, 33 und 65 als Lichtwegumschalter betrieben. Soll z.B. eine Signal-Laufzeitmessung über die Meßstrecke 7, 15, 17, 19, 22 erfolgen, so wird der über den statischen Strahlenteiler 60 mit der Meßstrecke gekoppelte erste Hilfslichtweg 61 dadurch wirkungslos gemacht, daß die Dämpfungsvorrichtung 65 auf minimale Lichtdurchlässigkeit geschaltet wird, während zum Sperren des Meßlichtweges die auch zur Dynamiksteuerung dienende steuerbare Dämpfungsvorrichtung 20 verwendet werden kann.

Statt mit Hilfe der Dämpfungsvorrichtungen 20, 33 und 65 kann derselbe Effekt auch durch ein entsprechendes alternatives Sperren der Leitungen 24 und 67 erreicht werden.

Es werden bei dieser Variante also zur Bildung eines Entfernungsmeßwertes wenigstens vier zweiteilige Zeitmessungen durchgeführt, was zwar die Meßgeschwindigkeit verringert, aber den Vorteil bietet, daß die Zeitmeßvorrichtung nur eine einzige Analogmeßschaltung umfassen muß, die überdies ebenso wie die beiden Empfänger 23 und 50 streng periodisch betrieben werden kann.

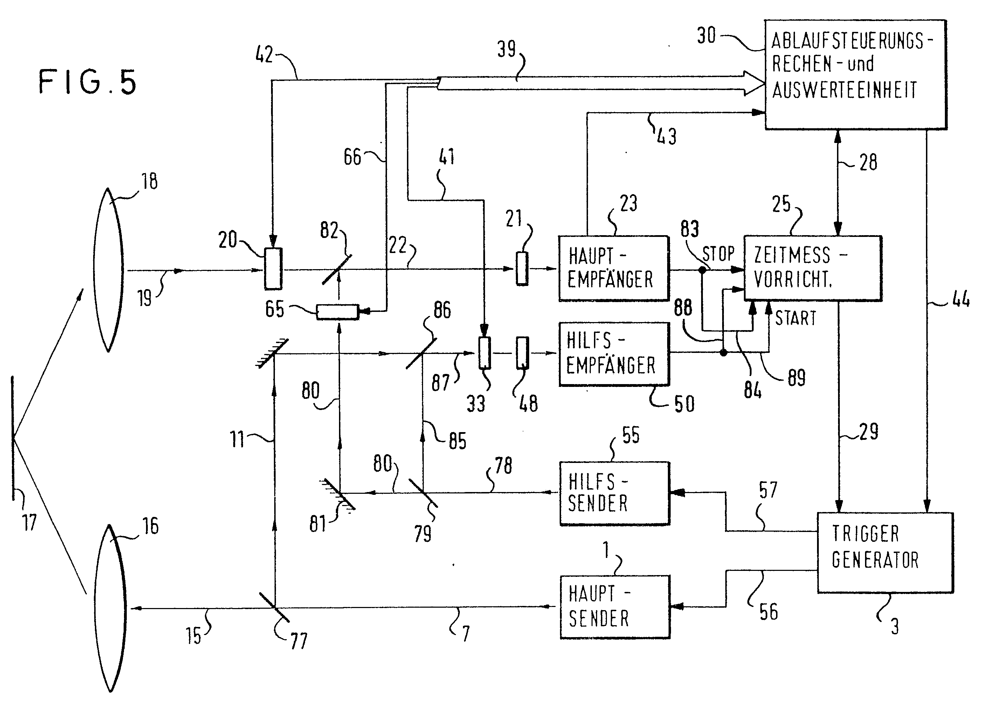

Die in Fig. 5 dargestellte Variante unterscheidet sich von allen vorausgehenden vor allem dadurch, daß ihre Referenzstrecke 11, die von der Meßstrecke 7, 15, 17, 19, 22 mit Hilfe eines Strahlenteilers 77 abgezweigt ist, nicht am Hauptempfänger 23 sondern am Hilfsempfänger 50 endet.

Zur Durchführung einer Signal-Laufzeitmessung über die Meßstrecke 7, 15, 17, 19, 22 wird bei dieser Variante zunächst vom Hilfssender 55 aufgrund eines über die Leitung 29 mit dem Zeitbasissignal synchronisierten Triggersignals ein Lichtimpuls abgegeben, der über den Senderlichtweg 78 des Hilfssenders 55 mit seinem Hauptteil einen zweiten Strahlenteiler 79 geradlinig durchläuft und auf einem geräteinternen ersten Hilfslichtweg 80 über einen total reflektierenden Umlenkspiegel 81, eine steuerbare Dämpfungseinheit 65 und einen teildurchlässigen Einkoppelspiegel 82 in den zum Hauptempfänger 23 führenden Lichtweg 22 gelangt. Das beim Empfang dieses Lichtimpulses vom Hauptempfänger 23 erzeugte zeitsignifikante Signal wird dem Start- und dem Stop-Eingang der Zeitmeßvorrichtung 25 über die Leitungen 83, 84 gleichzeitig zugeführt; es wird jedoch durch einen nicht dargestellten elektronischen Schalter hinter dem Stop-Eingang der Zeitmeßvorrichtung 25 unterdrückt, so daß es nur als Start-Signal wirksam wird.

Hierdurch wird eine dreiteilige Signallaufzeitmessung über die Meßstrecke ausgelöst, d.h. es wird durch eine Analogmeßschaltung der Zeitabstand dieses Start-Signals zu einer nachfolgenden definierten Flanke des Zeitbasissignals bestimmt und gleichzeitig mit dieser Flanke die Periodenzählung des Zeitbasissignals begonnen.

Der vom Strahlenteiler 79 ausgekoppelte kleine Teil des vom Hilfssender 55 erzeugten Lichtimpulses wird in einen zweiten geräteinternen Hilfslichtweg 85 eingespeist und gelangt über einen teildurchlässigen Einkoppelspiegel 86 in einen zum Hilfsempfänger 50 führenden Lichtweg 87 der eine steuerbare Dämpfungsvorrichtung 33 enthält. Das daraufhin vom Hilfsempfänger 50 erzeugte zeitsignifikante Signal wird über die Leitungen 88, 89 gleichzeitig dem Stop- und dem Start-Eingang der Zeitmeßvorrichtung 25 zugeführt, bleibt aber unwirksam, weil die Eingänge durch die oben erwähnten elektronischen Schalter blockiert sind. Es sei hier ausdrücklich darauf hingewiesen, daß der statische Strahlenteiler 79 in Verbindung mit dem beschriebenen Betrieb der elektronischen Schalter der Zeitmeßvorrichtung 25 wie ein Lichtwegumschalter arbeitet.

Eine definierte Anzahl von Perioden des Zeitbasissignals nach dem oben genannten Triggersignal für den Hilfssender 55 gibt der Triggersignal-Generator 3 ein ebenso mit dem Zeitbasissignal synchronisiertes Triggersignal für den Hauptsender 1 ab, dessen Lichtimpuls über den Senderlichtweg 7 und den in Verbindung mit der steuerbaren Dämpfungsvorrichtung 33 bzw. den in der Zeitmeßvorrichtung 25 befindlichen, die Eingänge blockierenden elektronischen Schaltern als Lichtwegumschalter arbeitenden, teildurchlässigen Spiegel 77 in die Meßstrecke 15, 17, 19, 22 und zum Hauptempfänger 23 gelangt, dessen Ausgangssignal als Stop-Signal über die Leitung 83 für die Zeitmeßvorrichtung 25 wirksam wird. Die jetzt erforderliche zweite Meßwertbildung kann auch bei sehr kleinen Entfernungen von derselben Analogmeßschaltung durchgeführt werden wie die erste Feinmeßwertbildung, da der zeitliche Abstand der beiden Trigger-Signale, der ein ganzzahliges Vielfaches einer Periode des Zeitbasissignals ist, genügend groß gewählt werden kann.

Außer diesem bekannten Zeitabstand gehen in die Signal-Laufzeitmessung über die Meßstrecke nur das Ansprechverhalten der beiden Sender 1 und 55 als parasitäre Größen ein, während das Ansprechverhalten des Hauptempfängers 23 sowie die Signalverarbeitungszeit der Analogmeßschaltung in der Zeitmeßvorrichtung 25 jeweils. zweimal mit entgegengesetzten Vorzeichen eingehen und sich somit bei genügend kurzem Zeitabstand zwischen Start- und Stop-Signal selbst herausheben.

Bei der nachfolgenden Signal-Laufzeitmessung über die Referenzstrecke wird wieder zunächst der Hilfssender streng mit dem Zeitbasissignal korreliert getriggert. Von dem dabei emittierten Lichtimpuls wird jetzt aber durch eine entsprechende Steuerung der elektronischen Schalter der Zeitmeßvorrichtung 25 nur der kleine vom Strahlenteiler 79 in den zweiten Hilfslichtweg 85 eingespeiste Teil wirksam, der den Hilfsempfänger 50 zur Abgabe eines Start-Signals über die Leitung 89 veranlaßt, während die Leitung 88 blokkiert ist.

Es beginnt wieder eine dreiteilige Signal-Laufzeitmessung, die durch einen ebenfalls um eine definierte Anzahl von Perioden des Zeitbasissignals später getriggerten Lichtimpuls beendet wird, der vom Hauptsender 1 über den Senderlichtweg 7, den Strahlenteiler 77, den Referenzlichtweg 11, den Einkoppelspiegel 86 und den Lichtweg 87 ebenfalls zum Hilfsempfänger 50 gelangt und diesen zur Abgabe eines Stop-Signals veranlaßt, während alle anderen Leitungen 89, 83, 84 zur Zeitmeßvorrichtung 25 blockiert sind.

Der somit gewonnene Signal-Laufzeitwert über die Referenzstrecke 7, 11, 87 enthält an parasitären Zeitgrößen wieder nur das Ansprechverhalten der beiden Sender 1 und 55, während sich das Ansprechverhalten des Hilfsempfängers 50 und die Signalverarbeitungszeit der Analogmeßschaltung jeweils wieder selbst eliminieren.

Durch eine Subtraktion der Signal-Laufzeitwerte über die Meß- und über die Referenzstrecke kann auch der Einfluß der Sender beseitigt werden, wenn die oben mehrfach genannte Bedingung einer schnellen Meßfolge erfüllt ist.

Der besondere Vorteil dieser Variante ist, wie bereits erwähnt, darin zu sehen, daß die Zeitmeßvorrichtung nur eine einzige Analogmeßschaltung aufzuweisen braucht, also echt einkanalig arbeitet, was eine besonders gute Meßgenauigkeit gewährleistet.

## Patentansprüche

1. Verfahren zum Messen der Entfernung zwischen einem Meßort und einem Zielgegenstand, bei dem
- der Zielgegenstand (17) durch Lichtimpulse beleuchtet wird, die jeweils von einer am Meßort befindlichen optischen Senderanordnung (1; 1, 55) auf Veranlassung eines dieser Senderanordnung zugeführten Triggersignals erzeugt werden,
- die am Zielgegenstand reflektierten Lichtimpulse am Meßort mittels einer optoelektrischen Empfängeranordnung (23; 23, 50) in elektrische Ausgangssignale umgesetzt werden, und
- die Länge der vom Meßort über den Zielgegenstand zurück zum Meßort führenden Meßstrecke unter Verwendung des Ergebnisses einer Signal-Laufzeitmessung über die Meßstrecke bestimmt wird, welche durch ein mit dem Emissionszeitpunkt eines Lichtimpulses korreliertes Startsignal ausgelöst und durch ein Stopsignal beendet wird, das aus dem von dem betreffenden Lichtimpuls erzeugten Ausgangssignal abgeleitet wird, dadurch gekennzeichnet, daß

– zusätzlich zur Signal-Laufzeitmessung über die Meßstrecke jeweils im Wechsel mit und unabhängig von dieser Messung eine Signal-Laufzeitmessung über eine geräteintern zwischen der Senderanordnung (1; 1, 55) und der Empfängeranordnung (23; 23, 50) verlaufende Referenzstrecke durchgeführt wird, und

– zur Bestimmung der Länge der Meßstrecke die Differenz der bei den beiden Signal-Laufzeitmessungen erhaltenen Werte gebildet wird.

2. Verfahren nach Anspruch 1, dadurch gekennzeichnet,

– daß die Lichtimpulse von einem einzigen, in der Senderanordnung vorgesehenen optischen Sender (1) erzeugt werden und entweder als Meßlichtimpulse über die Meßstrecke oder als Referenzlichtimpulse über die Referenzstrecke (11) zur Empfängeranordnung gelangen,

– daß die Meßlichtimpulse nach Durchlaufen der Meßstrecke und die Referenzlichtimpulse nach Durchlaufen der Referenzstrecke (11) von einem einzigen, in der Empfängeranordnung vorgesehenen optoelektrischen Empfänger (23) empfangen werden, und

– daß der zur Erzeugung des jeweiligen Meßlichtimpulses oder Referenzlichtimpulses abgegebene Triggerimpuls als Startsignal und das beim Empfang des betreffenden Meßlichtimpulses oder Referenzlichtimpulses vom Empfänger (23) erzeugte Ausgangssignal als Stopsignal für die jeweilige Signal-Laufzeitmessung dient.

3. Verfahren nach Anspruch 1, dadurch gekennzeichnet,

– daß die Lichtimpulse von einem einzigen, in der Senderanordnung vorgesehenen optischen Sender (1) erzeugt werden und entweder als Meßlichtimpuls über die Meßstrecke oder als Referenzlichtimpuls über die Referenzstrecke (11) zur Empfängeranordnung gelangen,

– daß die Meßlichtimpulse nach Durchlaufen der Meßstrecke und die Referenzlichtimpulse nach Durchlaufen der Referenzstrecke (11) von einem in der Empfängeranordnung vorgesehenen optoelektrischen Hauptempfänger (23) empfangen werden,

– daß von den vom Sender erzeugten Lichtimpulsen vor dem Einspeisen in die Meßstrecke oder in die Referenzstrecke (11) jeweils ein Teil abgezweigt und als Hilfslichtimpuls in einen eine konstante Laufzeit vorgebenden Hilfslichtweg (46) eingespeist wird, der die Hilfslichtimpulse einem in der Empfängeranordnung vorgesehenen optoelektrischen Hilfsempfänger (50) zuführt, und

– daß das beim Empfang des jeweiligen Hilfslichtimpulses vom Hilfsempfänger (50) erzeugte Ausgangssignal als Startsignal und das beim Empfang des zugehörigen Meßlichtimpulses oder Referenzlichtimpulses vom Hauptempfänger (23) erzeugte Ausgangssignal als Stopsignal für die jeweilige Signal-Laufzeitmessung dient.

4. Verfahren nach Anspruch 1, dadurch gekennzeichnet,

– daß von einem in der Senderanordnung vorgesehenen optischen Hauptsender (1) erzeugte Lichtimpulse als Meßlichtimpulse in die Meßstrecke eingespeist werden,

– daß von einem in der Senderanordnung vorgesehenen optischen Hilfssender (55) erzeugte Lichtimpulse als Referenzlichtimpulse in die Referenzstrecke (11) eingespeist werden,

– daß die Meßlichtimpulse nach Durchlaufen der Meßstrecke und die Referenzlichtimpulse nach Durchlaufen der Referenzstrecke (11) von einem in der Empfängeranordnung vorgesehenen optoelektrischen Hauptempfänger (23) empfangen werden,

– daß von den vom Hauptsender (1) erzeugten Meßlichtimpulsen vor dem Einspeisen in die Meßstrecke jeweils ein Teil abgezweigt und als erster Hilfslichtimpuls in einen eine konstante Laufzeit vorgebenden ersten Hilfslichtweg (61) eingespeist wird, der die ersten Hilfslichtimpulse einem in der Empfängeranordnung vorgesehenen optoelektrischen Hilfsempfänger (50) zuführt,

– daß von den vom Hilfssender (55) erzeugten Referenzlichtimpulsen vor dem Einspeisen in die Referenzstrecke (11) jeweils ein Teil abgezweigt und als zweiter Hilfslichtimpuls in einen eine konstante Laufzeit vorgebenden zweiten Hilfslichtweg (73) eingespeist wird, der die zweiten Hilfslichtimpulse dem Hilfsempfänger (50) zuführt, und

– daß das beim Empfang eines ersten Hilfslichtimpulses vom Hilfsempfänger (50) erzeugte Ausgangssignal als Startsignal und das beim Empfang des zugehörigen Meßlichtimpulses vom Hauptempfänger (23) erzeugte Ausgangssignal als Stopsignal für die betreffende Signal-Laufzeitmessung über die Meßstrecke und das beim Empfang eines zweiten Hilfslichtimpulses vom Hilfsempfänger (50) erzeugte Ausgangssignal als Startsignal und das beim Empfang des zugehörigen Referenzlichtimpulses vom Hauptempfänger (23) erzeugte Ausgangssignal als Stopsignal für die betreffende Signal-Laufzeitmessung über die Referenzstrecke dient.

5. Verfahren nach Anspruch 1, dadurch gekennzeichnet,

– daß von einem in der Senderanordnung vorgesehenen optischen Hauptsender (1) erzeugte Lichtimpulse entweder als Meßlichtimpulse über die Meßstrecke oder als erste Hilfslichtimpulse über einen eine konstante Laufzeit vorgebenden ersten Hilfslichtweg (61) zur Empfängeranordnung gesendet werden,

– daß von einem in der Senderanordnung vorgesehenen optischen Hilfssender (55) erzeugte Lichtimpulse entweder als Referenzlichtimpulse über die Referenzstrecke (11) oder als zweite Hilfslichtimpulse über einen eine konstante Laufzeit vorgebenden zweiten Hilfslichtweg (73) zur Empfängeranordnung gesendet werden,

– daß die Meßlichtimpulse nach Durchlaufen der Meßstrecke und die Referenzlichtimpulse nach Durchlaufen der Referenzstrecke (11) von einem in der Empfängeranordnung vorgesehenen optoelektrischen Hauptempfänger (23) empfangen werden,

– daß die ersten Hilfslichtimpulse nach Durchlaufen des ersten Hilfslichtweges (61) und die zweiten Hilfslichtimpulse nach Durchlaufen des zweiten Hilfslichtweges (73) von einem in der Empfängeranordnung vorgesehenen optoelektrischen Hilfsempfänger (50) empfangen werden,

– daß durch entsprechende Triggerung von Hauptsender (1) und Hilfssender (55) und entsprechende alternierende Weiterleitung über die verschiedenen Lichtwege wenigstens ein Meßlichtimpuls, ein erster Hilfslichtimpuls, ein Referenzlichtimpuls und ein zweiter Hilfslichtimpuls erzeugt werden und daß für jeden dieser Lichtimpulse die Signal-Laufzeit gemessen wird, wobei als Startsignal jeweils der zugehörige Triggerimpuls und als Stopsignal das beim Empfang des betreffenden Lichtimpulses vom Hauptempfänger (23) oder vom Hilfsempfänger (50) erzeugte Ausgangssignal dient, und

– daß die Differenz zwischen der Signal-Laufzeit von wenigstens einem Meßlichtimpuls und der Signal-Laufzeit von wenigstens einem ersten Hilfslichtimpuls und die Differenz zwischen der Signal-Laufzeit von wenigstens einem Referenzlichtimpuls und der Signal-Laufzeit von wenigstens einem zweiten Hilfslichtimpuls gebildet wird und die Differenz dieser beiden Differenzen in die zur Bestimmung der Länge der Meßstrecke gebildete Differenz eingeht.

6. Verfahren nach Anspruch 1, dadurch gekennzeichnet,

– daß von einem in der Senderanordnung vorgesehenen optischen Hauptsender (1) erzeugte Lichtimpulse entweder als Meßlichtimpulse über die Meßstrecke oder als Referenzlichtimpulse über die Referenzstrecke (11) zur Empfängeranordnung gelangen,

– daß von einem in der Senderanordnung vorgesehenen optischen Hilfssender (55) erzeugte Lichtimpulse entweder als erste Hilfslichtimpulse über einen eine konstante Laufzeit vorgebenden ersten Hilfslichtweg (80) oder als zweite Hilfslichtimpulse über einen eine konstante Laufzeit vorgebenden zweiten Hilfslichtweg (85) zur Empfängeranordnung gelangen,

– daß die Meßlichtimpulse nach Durchlaufen der Meßstrecke und die ersten Hilfslichtimpulse nach Durchlaufen des ersten Hilfslichtweges (80) von einem in der Empfängeranordnung vorgesehenen optoelektrischen Hauptempfänger (23) empfangen werden,

– daß die Referenzlichtimpulse nach Durchlaufen der Referenzstrecke (11) und die zweiten Hilfslichtimpulse nach Durchlaufen des zweiten Hilfslichtweges (83) von einem in der Empfängeranordnung vorgesehenen optoelektrischen Hilfsempfänger (50) empfangen werden,

– daß mit Hilfe von Triggerimpulsen, die mit einem Zeitbasissignal synchronisiert sind, Hauptsender (1) und Hilfssender (55) so gesteuert und die dabei erzeugten Lichtimpulse so alternierend über die verschiedenen Lichtwege weitergeleitet werden, daß wenigstens ein erster Hilfslichtimpuls und danach in einem vorgebbaren, festen Zeitabstand ein Meßlichtimpuls sowie wenigstens ein zweiter Hilfslichtimpuls und danach mit demselben Zeitabstand ein Referenzlichtimpuls entstehen, und

– daß das vom Hauptempfänger (23) bzw. vom Hilfsempfänger (50) beim Empfang des betreffenden ersten bzw. zweiten Hilfslichtimpulses abgegebene Ausgangssignal als Startsignale und das vom Hauptempfänger (23) bzw. vom Hilfsempfänger (50) beim Empfang des betreffenden Meßlichtimpulses bzw. Referenzlichtimpulses abgegebene Ausgangssignal als Stopsignale für die betreffende Signal-Laufzeitmessung dienen.

7. Verfahren nach einem der Ansprüche 2 oder 5, dadurch gekennzeichnet,

– daß die Triggersignale jeweils unverzögert als Startsignale für die betreffende Signal-Laufzeitmessung und mit einer vorbestimmten Verzögerung zum Auslösen des betreffenden Lichtimpulses verwendet werden.

8. Verfahren nach einem der Ansprüche 1 bis 5, dadurch gekennzeichnet, daß ein Zeitbasissignal erzeugt wird, daß die Triggerimpulse unabhängig vom Zeitbasissignal erzeugt werden, daß für jede Signal-Laufzeitmessung ein erster Feinmeßwert durch eine Analogmessung des Zeitabstandes des betreffenden Startsignales zu einer definierten nachfolgenden Flanke des Zeitbasissignals und ein zweiter Feinmeßwert durch eine Analogmessung des Zeitabstandes des betreffenden Stopsignals zu einer nachfolgenden definierten Flanke des Zeitbasissignals gewonnen wird und daß für jeden Entfernungsmeßwert ein Grobmeßwert für die Signal-Laufzeitmeßwerte über die Meßstrecke durch Abzählen der Zeitbasissignalflanken ermittelt wird, die zwischen der definierten, auf das Startsignal folgenden Flanke und der Flanke des Zeitbasissignals liegen, die auf die definierte, dem Stopsignal nachfolgende Flanke folgt.

9. Verfahren nach einem der Ansprüche 1 bis 6, dadurch gekennzeichnet, daß ein Zeitbasissignal erzeugt wird, daß jeder Triggerimpuls synchron mit einer Flanke des Zeitbasissignals erzeugt wird, daß für jede Signal-Laufzeitmessung ein Feinmeßwert durch eine Analogmessung des Zeitabstandes des betreffenden Stopsignals zu einer jeweils definierten nachfolgenden Flanke des Zeitbasissignals gewonnen wird und daß für jeden Entfernungsmeßwert ein Grobmeßwert für wenigstens einen Signal-Laufzeitmeßwert über die Meßstrecke durch Abzählen der Zeitbasissignalflanken ermittelt wird, die zwischen einer eine definierte Korrelation zu dem zugehörigen Triggerimpuls aufweisenden Flanke und der Flanke liegen, die auf die die zugehörige Analogmessung beendende Flanke des Zeitbasissignals folgt.

10. Verfahren nach Anspruch 8 oder 9, dadurch gekennzeichnet, daß für jeden Signal-Laufzeitmeßwert ein Grobmeßwert durch Abzählen der entsprechenden Zeitbasissignalflanken gewonnen wird.

11. Verfahren nach einem der Ansprüche 1 bis 10, dadurch gekennzeichnet, daß auf jede einzelne Signal-Laufzeitmessung über die Meßstrecke eine einzelne Signal-Laufzeitmessung über die Referenzstrecke und umgekehrt folgt und daß ein einzelner Entfernungsmeßwert jeweils durch Differenzbildung zwischen einem Mittelwert aus mehreren Signal-Laufzeitmeßwerten über die Meßstrecke und einem Mittelwert aus mehreren Signal-Laufzeitmeßwerten über die Referenzstrecke ermittelt wird.

12. Verfahren nach Anspruch 11, dadurch gekennzeichnet, daß die Triggerimpulse für diejenigen Lichtimpulse, aus deren Signal-Laufzeitmeßwerten über die Meß- bzw. Referenzstrecke die zur Gewinnung eines einzelnen Entfernungsmeßwertes dienenden Mittelwerte gebildet werden, zeitlich so gesteuert werden, daß diese Lichtimpulse an der Empfängeranordnung periodisch eintreffen.

13. Entfernungsmeßgerät zur Durchführung des Verfahrens nach Anspruch 1, mit
— einem Triggersignalgenerator (3),
— einer von dem Triggersignalgenerator gesteuerten optischen Senderanordnung (1; 1, 55) zur Erzeugung von Lichtimpulsen,
— einer optoelektrischen Empfängeranordnung (23; 23, 50) zur Umsetzung der an einem Zielgegenstand (17) reflektierten Lichtimpulse in elektrische Ausgangssignale,
— Einrichtungen (3; 50; 3, 55) zur Erzeugung von Startsignalen, die jeweils mit der Emission eines Lichtimpulses zeitlich korreliert sind und die jeweils eine Messung der Signal-Laufzeit über die von der Senderanordnung zum Zielgegenstand und zurück zur Empfängeranordnung führende Meßstrecke (7, 15, 19, 22) auslösen,
— Einrichtungen (23) zur Ableitung von Stopsignalen zur Beendigung der Signal-Laufzeitmessung über die Meßstrecke aus den elektrischen Ausgangssignalen,
— einer von den Start- und Stopsignalen gesteuerten Zeitmeßeinrichtung (25) zur Bestimmung der Signal-Laufzeit über die Meßstrecke,

— einer geräteintern zwischen der Senderanordnung und der Empfängeranordnung verlaufenden Referenzstrecke (11), die ebenfalls mit Lichtimpulsen aus der Senderanordnung beaufschlagt ist, gekennzeichnet durch
— Steuereinrichtungen (3, 10, 30, 33, 65) zur Erzeugung der über die Referenzstrecke laufenden Lichtimpulse im Wechsel mit und unabhängig von den über die Meßstrecke laufenden Lichtimpulsen,
— Einrichtungen (3; 50; 3, 55) zur Erzeugung von Startsignalen für die Zeitmeßeinrichtung jeweils zu Zeitpunkten, die einen vorbestimmten Abstand vom Zeitpunkt der Emission eines über die Referenzstrecke laufenden Lichtimpulses haben,
— Einrichtungen (23; 23, 50) zur Erzeugung von Stopsignalen für die Zeitmeßeinrichtung beim Empfang von über die Referenzstrecke gelaufenen Lichtimpulsen in der Empfängeranordnung,
— eine Auswerteschaltung (30) zur Ermittlung der Differenz der von der Zeitmeßeinrichtung (25) bei der Beaufschlagung der Meßstrecke bzw. der Referenzstrecke mit den Lichtimpulsen jeweils gemessenen Signal-Laufzeiten.

14. Entfernungsmeßgerät nach Anspruch 13, dadurch gekennzeichnet,
— daß die Senderanordnung einen einzigen optischen Sender (1) umfaßt,
— daß eine optische Schaltvorrichtung (10) vorgesehen ist, die die vom Sender (1) erzeugten Lichtimpulse entweder als Meßlichtimpulse über die Meßstrecke oder als Referenzlichtimpulse über die Referenzstrecke (11) zur Empfängeranordnung gelangen läßt,
— daß die Einrichtung zur Erzeugung der Startsignale für die Signal-Laufzeitmessungen über die Meßstrecke und über die Referenzstrecke der Triggersignalgenerator (3) ist, dessen Triggerimpulse der Zeitmeßvorrichtung (25) zugeführt werden, und
— daß die Empfängeranordnung einen einzigen optoelektrischen Empfänger (23) umfaßt, der sowohl die Meßlichtimpulse als auch die Referenzlichtimpulse empfängt und dessen beim Empfang des jeweiligen Lichtimpulses erzeugtes Ausgangssignal als Stopsignal für die betreffende Signal-Laufzeitmessung dient.

15. Entfernungsmeßgerät nach Anspruch 14, dadurch gekennzeichnet, daß die vom Triggersignalgenerator (3) erzeugten Triggerimpulse der Zeitmeßvorrichtung (25) und dem Sender (1) über ein Verzögerungsglied (2), das eine vorgebbare Verzögerungszeit aufweist, zugeführt werden.

16. Entfernungsmeßgerät nach Anspruch 13, dadurch gekennzeichnet,
— daß die Senderanordnung einen einzigen optischen Sender (1) umfaßt,
— daß eine optische Schaltvorrichtung (10) vorgesehen ist, die die vom Sender (1) erzeugten Lichtimpulse entweder als Meßlichtimpulse über die Meßstrecke oder als Referenzlichtimpulse über die Referenzstrecke (11) zur Empfängeranordnung gelangen läßt,
— daß die Einrichtung zur Erzeugung der Startsignale für die Signal-Laufzeitmessungen über die Meß- und die Referenzstrecke folgende Teile umfaßt: einen vor dem Sender (1) angeordneten Strahlenteiler (45), der von jedem vom Sender (1) erzeugten Lichtimpuls einen Teil als Hilfslichtimpuls abzweigt, einen eine konstante Laufzeit vorgebenden Hilfslichtweg (46), in den die Hilfslichtimpulse vom Strahlenteiler (45) eingespeist werden, und einen in der Empfängeranordnung vorgesehenen optoelektrischen Hilfsempfänger (50), der sowohl die von den Meßlichtimpulsen als auch die von den Referenzlichtimpulsen abgezweigten Hilfslichtimpulse empfängt und dabei ein mit dem Empfangszeitpunkt zeitlich korreliertes Ausgangssignal erzeugt, das der Zeitmeßvorrichtung (25) als Startsignal für die betreffende Laufzeitmessung zugeführt wird und
— daß die Empfängeranordnung weiterhin einen optoelektrischen Hauptempfänger (23) umfaßt, der sowohl die Meßlichtimpulse als auch die Referenzlichtimpulse empfängt und dessen beim Empfang des jeweiligen Lichtimpulses erzeugtes Ausgangssignal als Stopsignal für die betreffende Signal-Laufzeitmessung dient.

17. Entfernungsmeßgerät nach Anspruch 13, dadurch gekennzeichnet,

– daß die Senderanordnung einen optischen Hauptsender (1), dessen Lichtimpulse als Meßlichtimpulse in die Meßstrecke eingespeist werden, und einen optischen Hilfssender (55) umfaßt, der durch den Triggersignalgenerator (3) unabhängig vom Hauptsender (1) gesteuert wird und dessen Lichtimpulse als Referenzlichtimpulse in die Referenzstrecke (11) eingespeist werden,

– daß die Einrichtung zur Erzeugung der Startsignale für die Signal-Laufzeitmessungen über die Meßstrecke folgende Teile umfaßt: einen ersten Strahlenteiler (60), der vor dem Hauptsender (1) angeordnet ist und von jedem Meßlichtimpuls einen Teil als ersten Hilfslichtimpuls abzweigt, einen eine konstante Laufzeit vorgebenden ersten Hilfslichtweg (61), in den die ersten Hilfslichtimpulse vom ersten Strahlenteiler (60) eingespeist werden, und einen in der Empfängeranordnung vorgesehenen optoelektrischen Hilfsempfänger (50), der die ersten Hilfslichtimpulse empfängt und dabei jeweils ein mit dem Empfangszeitpunkt zeitlich korreliertes Ausgangssignal erzeugt, das der Zeitmeßvorrichtung (25) als Startsignal für die betreffende Signal-Laufzeitmessung über die Meßstrecke zugeführt wird,

– daß die Einrichtung zur Erzeugung der Startsignale für die Signal-Laufzeitmessungen über die Referenzstrecke folgende Teile umfaßt: einen zweiten Strahlenteiler (70), der vor dem Hilfssender (55) angeordnet ist und von jedem Referenzlichtimpuls einen Teil als zweiten Hilfslichtimpuls abzweigt, einen eine konstante Laufzeit vorgebenden zweiten Hilfslichtweg (73), in den die zweiten Hilfslichtimpulse vom zweiten Strahlenteiler (70) eingespeist werden, und den Hilfsempfänger (50), der auch die zweiten Hilfslichtimpulse empfängt und dabei jeweils ein mit dem Empfangszeitpunkt zeitlich korreliertes Ausgangssignal erzeugt, das der Zeitmeßvorrichtung (25) als Startsignal für die betreffende Signal-Laufzeitmessung über die Referenzstrecke zugeführt, und

– daß die Empfängeranordnung weiterhin einen optoelektrischen Hauptempfänger (23) umfaßt, der sowohl die Meßlichtimpulse als auch die Referenzlichtimpulse empfängt und dessen beim Empfang des jeweiligen Lichtimpulses erzeugtes, mit dem Empfangszeitpunkt zeitlich korrelierendes Ausgangssignal als Stopsignal für die betreffende Signal-Laufzeitmessung dient.

18. Entfernungsmeßgerät nach Anspruch 13, dadurch gekennzeichnet,

– daß die Senderanordnung einen optischen Hauptsender (1) und einen optischen Hilfssender (55) umfaßt, der durch den Triggersignalgenerator (3) unabhängig vom Hauptsender (1) gesteuert wird,

– daß eine erste optische Schaltvorrichtung (20, 65) vorgesehen ist, die die vom Hauptsender (1) erzeugten Lichtimpulse entweder als Meßlichtimpulse über die Meßstrecke oder als Hilfslichtimpulse über einen eine konstante Laufzeit vorgebenden ersten Hilfslichtweg (61) zur Empfängeranordnung gelangen läßt,

– daß eine zweite optische Schaltvorrichtung (33, 65) vorgesehen ist, die die vom Hilfssender (55) erzeugten Lichtimpulse entweder als Referenzlichtimpulse über die Referenzstrecke (11) oder als zweite Hilfslichtimpulse über einen eine feste Laufzeit vorgebenden zweiten Hilfslichtweg (73) zur Empfängeranordnung gelangen läßt,

– daß die Einrichtung zur Erzeugung der Startsignale für Signal-Laufzeitmessungen über die Meß- und die Referenzstrecke der Triggersignalgenerator (3) ist, dessen Triggerimpulse der Zeitmeßvorrichtung (25) zugeführt werden und der gleichzeitig als Einrichtung zur Erzeugung von Startsignalen dient, von denen jedes mit dem Emissionszeitpunkt eines ersten oder eines zweiten Hilfslichtimpulses zeitlich korreliert ist und zum Auslösen einer entsprechenden Signal-Laufzeitmessung über den ersten oder zweiten Hilfslichtweg dient,

– daß die Empfängeranordnung einen optoelektrischen Hauptempfänger (23), der die Meßlichtimpulse und die Referenzlichtimpulse empfängt und dessen beim Empfang des jeweiligen Lichtimpulses erzeugtes, mit dem Empfangszeitpunkt zeitlich korreliertes Ausgangssignal als Stopsignal für die betreffende Signal-Laufzeitmessung über die Meß- bzw. die Referenzstrecke dient, und einen optoelektrischen Hilfsempfänger (50) umfaßt, der die ersten und zweiten Hilfslichtimpulse empfängt und dessen beim Empfang des jeweiligen Hilfslichtimpulses erzeugtes, mit dem Empfangszeitpunkt zeitlich korreliertes Ausgangssignal als Stopsignal für die betreffende Signal-Laufzeitmessung über den ersten bzw. zweiten Hilfslichtweg dient, und

– daß die Auswerteschaltung die Differenz zwischen der Signal-Laufzeit für wenigstens einen Meßlichtimpuls und der Signal-Laufzeit für wenigstens einen ersten Hilfslichtimpuls und die Differenz zwischen der Signal-Laufzeit für wenigstens einen Referenzlichtimpuls und der Signal-Laufzeit für wenigstens einen zweiten Hilfslichtimpuls bildet und daß die Differenz dieser beiden Differenzen in die zur Bestimmung der Länge der Meßstrecke gebildete Differenz eingeht.

19. Entfernungsmeßgerät nach Anspruch 13, dadurch gekennzeichnet,

– daß die Senderanordnung einen optischen Hauptsender (1), die Empfängeranordnung einen optoelektrischen Hauptempfänger (23) und einen optoelektrischen Hilfsempfänger (50) und die Zeitmeßvorrichtung (25) eine Vorrichtung zur Erzeugung eines Zeitbasissignals umfaßt,

– daß eine erste optische Schaltvorrichtung (20, 33) vorgesehen ist, die die vom Hauptsender (1) erzeugten Lichtimpulse entweder als Meßlichtimpulse über die Meßstrecke zum Hauptempfänger (23) oder als Referenzlichtimpulse über die Referenzstrecke (11) zum Hilfsempfänger (50) gelangen läßt,

– daß die Einrichtung zur Erzeugung der Startsignale für die Signal-Laufzeitmessungen über die Meß- und die Referenzstrecke folgende Teile umfaßt: einen in der Senderanordnung vorgesehenen optischen Hilfssender (55), eine zweite optische Schaltvorrichtung (33, 65), die die vom Hilfssender (55) erzeugten Lichtimpulse entweder als erste Hilfslichtimpulse über einen eine konstante Laufzeit vorgebenden ersten Hilfslichtweg (80) zum Hauptempfänger (23) oder als zweite Hilfslichtimpulse über einen eine konstante Laufzeit vorgebenden zweiten Hilfslichtweg (85) zum Hilfsempfänger (50) gelangen läßt, und eine Steuervorrichtung (30), die dafür sorgt, daß mit Hilfe von mit dem Zeitbasissignal synchronisierten Triggersignalen der Hilfssender (55) in einem konstanten zeitlichen Abstand vor jeder Triggerung des Hauptsenders (1) getriggert wird, daß die beiden optischen Schaltvorrichtungen so gesteuert werden, daß nach jedem ersten Hilfslichtimpuls ein Meßlichtimpuls an den Hauptempfänger (23) und nach jedem zweiten Hilfslichtimpuls ein Referenzlichtimpuls an den Hilfsempfänger (50) gelangt, und daß die vom Hauptempfänger (23) beim Empfang der ersten Hilfslichtimpulse und die vom Hilfsempfänger (50) beim Empfang der zweiten Hilfslichtimpulse abgegebenen Ausgangssignale als Startsignale für die Signal-Laufzeitmessungen über die Meß- bzw. die Referenzstrecke dienen, während die vom Hauptempfänger (23) beim Empfang der Meßlichtimpulse und vom Hilfsempfänger (50) beim Empfang der Referenzlichtimpulse abgegebenen Ausgangssignale als Stopsignale für die betreffenden Signal-Laufzeitmessungen dienen.

20. Entfernungsmeßgerät nach einem der Ansprüche 14 bis 19, dadurch gekennzeichnet, daß die optische Schaltvorrichtung eine mechanisch bewegbare Spiegelvorrichtung (10) ist.

21. Entfernungsmeßgerät nach einem der Ansprüche 14 bis 19, dadurch gekennzeichnet, daß die optische Schaltvorrichtung einen statischen Strahlenteiler (60, 77) umfaßt, durch den ein Eingangslichtweg in wenigstens zwei Ausgangslichtwege aufgeteilt wird, daß in jedem der Ausgangslichtwege eine zwischen einer hohen Lichtdurchlässigkeit und einer sehr kleinen Lichtdurchlässigkeit umschaltbare Dämpfungseinrichtung (20, 65, 33) angeordnet ist, und daß die Dämpfungseinrichtungen (20, 33 bzw. 20, 65) so steuerbar sind, daß immer nur eine von ihnen eine hohe Lichtdurchlässigkeit und die andere eine geringe Lichtdurchlässigkeit aufweist.

22. Entfernungsmeßgerät nach einem der Ansprüche 18 bis 21, dadurch gekennzeichnet, daß der photoelektrische Wandler des Hilfsempfängers (50) eine PIN-Diode ist.

23. Entfernungsmeßgerät nach einem der Ansprüche 13 bis 22, dadurch gekennzeichnet, daß vor jedem Hauptempfänger (23) und vor jedem Hilfsempfänger (50) ein Interferenzfilter (21, 48) angeordnet ist.

**Claims**

1. A method for measuring the distance between a measuring place and a target, wherein
– the target (17) is illuminated by light pulses, each of which is generated by an optical transmitter arrangement (1; 1, 55) which is situated at the measuring place, in response to a trigger signal which is fed to this transmitter arrangement,
– the light pulses, which are reflected from the target are transformed into electric output signals by means of an opto-electric receiver arrangement (23; 23, 50) at the measuring place,
– the length of the measuring path, which extends from the measuring place to the target and therefrom back to the measuring place, is determined by using the result of a signal transit time measurement along the measuring path, which signal transit time measurement is triggered by a start signal being correlated with the instant of emission of a light pulse and is terminated by a stop signal being derived from the output signal which is generated by the respective light pulse, characterized
– in that additionally to the signal transit time measurement along the measuring path and alternating with and independently of this measurement a respective signal transit time measurement along a reference path is performed which extends inside the apparatus from the transmitter arrangement (1; 1, 55) to the receiver arrangement (23; 23, 50), and
– in that the difference is formed between the values which are obtained by the two signal transit time measurements in order to determine the length of the measuring path.

2. A method according to claim 1, characterized
– in that the light pulses are generated by one single optical transmitter (1) being provided in the transmitter arrangement and reach the receiver arrangement either as measuring light pulses via the measuring path or as reference light pulses via the reference path (11),
– in that the measuring light pulses, after having passed through the measuring path, and the reference light pulses, after having passed through the reference path (11), are received by one single opto-electric receiver (23) which is provided in the receiver arrangement, and
– in that the trigger pulse which is emitted for the generation of the respective measuring light pulse or reference light pulse is used as a start signal for the respective signal transit time measurement and that the output signal which is generated by the receiver (23) upon the reception of the respective measuring light pulse or reference light pulse is used as a stop signal for the respective signal transit time measurement.

3. A method according to claim 1, characterized
– in that the light pulses are generated by one single optical transmitter (1) being provided in the transmitter arrangement and reach the receiver arrangement either as measuring light pulses via the measuring path or as reference light pulses via the reference path (11),
– in that the measuring light pulses, after having passed through the measuring path, and the reference light pulses, after having passed through the reference path (11), are received by an opto-electric main receiver (23) which is provided in the receiver arrangement,
– in that from each of the light pulses generated by the transmitter, before feeding it into the measuring path or into the reference path (11), a part is branched off and fed as an auxiliary light pulse into an auxiliary light path (46) establishing a constant transit time and forwarding the auxiliary light pulses to an opto-electric auxiliary receiver (50) which is provided in the receiver arrangement, and

– in that the output signal which is generated by the auxiliary receiver (50) upon the reception of the respective auxiliary light pulse is used as a start signal for the respective signal transit time measurement and that the output signal which is generated by the main receiver (23) upon the reception of the corresponding measuring light pulse or reference light pulse is used as a stop signal for the respective signal transit time measurement.

4. A method according to claim 1, characterized
– in that light pulses, which are generated by an optical main transmitter (1) being provided in the transmitter arrangement, are fed as measuring light pulses into the measuring path,
– in that light pulses, which are generated by an optical auxiliary transmitter (55) provided in the transmitter arrangement are fed as reference light pulses into the reference light path (11),
– in that the measuring light pulses, after having passed through the measuring path, and the reference light pulses, after having passed through the reference path (11), are received by an opto-electric main receiver (23) which is provided in the receiver arrangement,
– in that from each of the measuring light pulses generated by the main transmitter (1), before feeding it into the measuring path, a part is branched off and is fed as a first auxiliary light pulse into a first auxiliary light path (61) establishing a constant transit time and forwarding the first auxiliary light pulses to an opto-electric auxiliary receiver (50) which is provided in the receiver arrangement,
– in that from each of the reference light pulses generated by the auxiliary transmitter (55), before feeding it into the reference path (11), a part is branched off and is fed as a second auxiliary light pulse into a second auxiliary light path (73) establishing a constant transit time and forwarding the second auxiliary light pulses to the opto-electric auxiliary receiver (50), and
– in that the output signal which is generated by the auxiliary receiver (50) upon the reception of a first auxiliary light pulse is used as a start signal for the respective signal transit time measurement along the measuring path, and that the output signal which is generated by the main receiver (23) upon the reception of the corresponding measuring light pulse is used as a stop signal for said signal transit time measurement along the measuring path, and in that the output signal which is generated by the auxiliary receiver (50) upon the reception of a second auxiliary light pulse is used as a start signal for the respective signal transit time measurement along the reference path, and that the output signal which is generated by the main receiver (23) upon the reception of the corresponding reference light pulse is used as a stop signal for said signal transit time measurement along the reference path.

5. A method according to claim 1, characterized
– in that light pulses which are generated by an optical main transmitter (1) being provided in the transmitter arrangement, are transmitted to the receiver arrangement either as measuring light pulses via the measuring path or as first auxiliary light pulses via a first auxiliary light path (61) establishing a constant transit time,
– in that light pulses, which are generated by an optical auxiliary transmitter (55) being provided in the transmitter arrangement, are transmitted to the receiver arrangement either as reference light pulses via the reference path (11) or as second auxiliary light pulses via a second auxiliary light path (73) establishing a constant transit time,
– in that the measuring light pulses, after having passed through the measuring path, and the reference light pulses, after having passed through the reference path (11), are received by an opto-electric main receiver (23) being provided in the receiver arrangement,
– in that the first auxiliary light pulses, after having passed through the first auxiliary light path (61), and the second auxiliary light pulses, after having passed through the second auxiliary light path (73), are received by an opto-electric auxiliary receiver (50) being provided in the receiver arrangement,
– in that a least one measuring light pulse, one first auxiliary light pulse, one reference light pulse and one second auxiliary light pulse are generated by correspondingly triggering the main transmitter (1) and the auxiliary transmitter (55) and by a corresponding alternating transmission via the different light paths, and that for each of these light pulses the signal transit time is measured by using as a start signal in each case the respective trigger pulse and as a stop signal the output signal which is generated either by the main receiver (23) or by the auxiliary receiver (50) upon the reception of the respective light pulse, and
– in that the difference is formed between the signal transit time of at least one measuring light pulse and the signal transit time of at least one first auxiliary light pulse, that the difference is formed between the signal transit time of at least one reference light pulse and the signal transit time of at least one second auxiliary light pulse, and that the difference of these two differences enters into the difference which is formed in order to determine the length of the measuring path.

6. A method according to claim 1, characterized
– in that light pulses, which are generated by an optical main transmitter (1) being provided in the transmitter arrangement, are transmitted to the receiver arrangement either as measuring light pulses via the measuring path or as reference light pulses via the reference path (11),
– in that light pulses, which are generated by an optical auxiliary transmitter (55) being provided in the transmitter arrangement, are transmitted to the receiver arrangement either as first auxiliary light pulses via a first auxiliary light path (80) establishing a constant transit time, or as second auxiliary light pulses via a second auxiliary light path (85) establishing a constant transit time,

– in that the measuring light pulses, after having passed through the measuring path, and the first auxiliary light pulses, after having passed through the first auxiliary light path (80), are received by an opto-electric main receiver (23) being provided in the receiver arrangement,

– in that the reference light pulses, after having passed through the reference path (11), and the second auxiliary light pulses, after having passed through the second auxiliary light path (83), are received by an opto-electric auxiliary receiver (50) being provided in the receiver arrangement,

– in that by means of trigger pulses being synchronized with a time base signal the main transmitter (1) and the auxiliary transmitter (55) are controlled and the thus generated light pulses are alternately diverted via the different light paths in such a way that at least one first auxiliary light pulse and, thereafter with a predeterminable fixed time distance, one measuring light pulse as well as at least one second auxiliary light pulse and, thereafter with the same time distance, one reference light pulse are generated, and

– in that the output signals, which are generated by the main receiver (23) or by the auxiliary receiver (50), respectively, upon reception of the respective first or second auxiliary light pulse, are used as start signals for the respective signal transit time measurements, and that the output signals, which are generated by the main receiver (23) or by the auxiliary receiver (50), respectively, upon reception of the respective measuring light pulse or reference light pulse, are used as stop signals for the respective signal transit time measurements.

7. A method according to any of claims 2 or 5, characterized

– in that the trigger signals are used as start signals for the respective signal transit time measurement without delay and are used for triggering the respective light pulse with a predetermined delay.

8. A method according to any of claims 1 to 5, characterized in that a time base signal is generated, in that the trigger pulses are generated independently of the time base signal, in that for each signal transit time measurement a first precision measurement value is obtained by an analog measurement of the time distance between the respective start signal and a defined subsequent edge of the time base signal, and that for each signal transit time measurement a second precision measurement value is obtained by an analog measurement of the time distance between the respective stop signal and a subsequent defined edge of the time base signal, and in that for each distance measurement value a coarse measurement value for the signal transit time measurement values along the measuring path is determined by counting the time base signal edges occurring between the defined edge following after the start signal and the time base signal edge following after the defined edge which follows after the stop signal.

9. A method according to any of claims 1 to 6, characterized in that a time base signal is generated, in that each trigger pulse is generated in synchronism with an edge of the time base signal, in that for each signal transit time measurement one precision measurement value is obtained by an analog measurement of the time distance between the respective stop signal and a respective defined subsequent edge of the time base signal, and in that for each distance measurement value one coarse measurement value for at least one signal transit time measurement value along the measuring path is obtained by counting the time base signal edges occurring between an edge having a defined correlation with the respective trigger pulse and the edge which follows after the edge of the time base signal terminating the respective analog measurement.

10. A method according to claim 8 or 9, characterized in that for each signal transit time measurement value a coarse measurement value is obtained by counting the respective time base signal edges.

11. A method according to any of claims 1 to 10, characterized in that after each individual signal transit time measurement along the measuring path follows an individual signal transit time measurement along the reference path and vice versa, and in that an individual distance measurement value in each case is determined by forming the difference between a mean value of several signal transit time measurement values along the measuring path and a mean value of several signal transit time measurement values along the reference path.

12. A method according to claim 11, characterized in that the trigger pulses for those light pulses, of which the signal transit time measurement values along the measuring path and the reference path, respectively, are used for forming the mean values which serve for obtaining one single distance measurement value, are so controlled in time, that these light pulses arrive periodically at the receiver arrangement.

13. Distance measuring apparatus for carrying out the method according to claim 1, having

– a trigger signal generator (3),

– an optical transmitter arrangement (1; 1, 55) which is controlled by the trigger signal generator to generate light pulses,

– an opto-electric receiver arrangement (23; 23, 50) for transforming the light pulses reflected from a target (17) into electric output signals,

– means (3; 50; 3, 55) for generating start signals, which in each case are correlated in time with the emission of a light pulse and which, in each case, trigger a measurement of the signal transit time along the measuring path (7, 15, 19, 22) extending from the transmitter arrangement to the target and therefrom back to the receiver arrangement,

— means (23) for deriving stop signals from the electric output signals for terminating the signal transit time measurement along the measuring path,

— a time measuring means (25) being controlled by the start and the stop signals for determining the signal transit time along the measuring path,

— a reference path (11) which extends inside the apparatus between the transmitter arrangement and the receiver arrangement and to which also light pulses from the transmitter arrangement are admitted, characterized by

— control means (3, 10, 30, 33, 65) for generating the light pulses passing through the reference path alternately with and independently of the light pulses passing through the measuring path,

— means (3; 50; 3, 55) for generating start signals for the time measuring means in each case at instants which have a predetermined distance from the instant of emission of a light pulse passing through the reference path,

— means (23; 23, 50) for generating stop signals for the time measuring means upon reception in the receiver arrangement of light pulses having passed through the reference path,

— an evaluating circuit (30) for determining the difference between the signal transit times which are measured in each case by the time measuring means (25) upon the admission of light pulses to the measuring path and to the reference path, respectively.

14. A distance measuring apparatus according to claim 13, characterized

— in that the transmitter arrangement comprises one single optical transmitter (1),

— in that an optical switching arrangement (10) is provided which allows the light pulses generated by the transmitter (1) to reach the receiver arrangement either as measuring light pulses along the measuring path or as reference light pulses along the reference path (11),

— in that the means for generating the start signals for the signal transit time measurements along the measuring path and along the reference path is the trigger signal generator (3), the trigger pulses of which are fed to the time measuring means (25), and

— in that the receiver arrangement comprises one single opto-electric receiver (23) which receives the measuring light pulses as well as the reference light pulses and the output signals of which, being generated upon the reception of the respective light pulse, serves as stop signal for the respective signal transit time measurement.

15. A distance measuring apparatus according to claim 14, characterized in that the trigger pulses generated by the trigger signal generator (3) are fed to the time measuring means (25) directly and are fed to the transmitter (1) via a delay circuit (2) which provides a predeterminable delay time.

16. A distance measuring apparatus according to claim 13, characterized

— in that the transmitter arrangement comprises one single optical transmitter (1),

— in that an optical switching arrangement (10) is provided which allows the light pulses generated by the transmitter (1) to reach the receiver arrangement either as measuring light pulses via the measuring path or as reference light pulses via the reference path (11),

— in that the means for generating the start signals for the signal transit time measurements along the measuring and the reference paths comprises the following parts: a beam splitter (45) which is arranged in front of the transmitter (1) and which branches off from each light pulse generated by the transmitter (1) a part which serves as an auxiliary light pulse, an auxiliary light path (46) which establishes a constant transit time and into which the auxiliary light pulses from the beam splitter (45) are fed, and an opto-electric auxiliary receiver (50), which is provided in the receiver arrangement, which receives the auxiliary light pulses being branched off from the measuring light pulses as well as from the reference light pulses, and which generates in these cases an output signal being correlated in time with the instant of reception and being fed to the time measuring means (25) as a start signal for the respective transit time measurement, and

— in that the receiver arrangement further comprises an opto-electric main receiver (23) which receives the measuring light pulses as well as the reference light pulses and the output signal of which, being generated upon the reception of the respective light pulse, serves as a stop signal for the respective signal transit time measurement.

17. A distance measuring apparatus according to claim 13, characterized

— in that the transmitter arrangement comprises an optical main transmitter (1) the light pulses of which are fed as measuring light pulses into the measuring path, and an optical auxiliary transmitter (55) which is controlled independently of the main transmitter (1) by the trigger signal generator (3) and the light pulses of which are fed as reference light pulses into the reference path (11),

— in that the means for generating the start signals for the signal transit time measurements along the measuring path comprises the following parts: a first beam splitter (60) which is arranged in front of the main transmitter (1) and which branches off from each measuring light pulse a part serving as first auxiliary light pulse, a first auxiliary light path (61) which establishes a constant transit time and into which the first auxiliary light pulses from the first beam splitter (60) are fed, and an opto-electric auxiliary receiver (50) which is provided in the receiver arrangement, which receives the first auxiliary light pulses, and which generates in each case an output signal being correlated in time with the instant of reception and being fed to the time measuring means (25) as a start signal for the respective signal transit time measurement along the measuring path,

— in that the means for generating the start signals for the signal transit time measurements along the reference path comprises the following parts: a second beam splitter (70) which is arranged in front of the auxiliary transmitter (55) and which branches off from each reference light pulse a part serving as second auxiliary light pulse, a second auxiliary light path (73) which establishes a constant transit time and into which the second auxiliary light pulses from the second beam splitter (70) are fed, and the auxiliary receiver (50) which also receives the second auxiliary light pulses and which generates in each case an output signal being correlated in time with the instant of reception and being fed to the time measuring means (25) as a start signal for the respective signal transit time measurement along the reference path, and

— in that the receiver arrangement further comprises an opto-electric main receiver (23), which receives the measuring light pulses as well as the reference light pulses and the output signal of which being generated upon the reception of the respective light pulse and being correlated in time with the instant of reception serves as a stop signal for the respective signal transit time measurement.

18. A distance measuring apparatus according to claim 13, characterized

— in that the transmitter arrangement comprises an optical main transmitter (1) and an optical auxiliary transmitter (55) which is controlled independently of the main transmitter (1) by the trigger signal generator (3),

— in that a first optical switching arrangement (20, 65) is provided, which allows the light pulses generated by the main transmitter (1) to reach the receiver arrangement either as measuring light pulses via the measuring path or as auxiliary light pulses via a first auxiliary light path (61) establishing a constant transit time,

— in that a second optical switching means (33, 65) is provided, which allows the light pulses generated by the auxiliary transmitter (55) to reach the receiver arrangement either as reference light pulses via the reference path (11) or as second auxiliary light pulses via a second auxiliary light path (73) establishing a constant transit time,

— in that the means for generating the start signals for the signal transit time measurements via the measuring path and via the reference path is the trigger signal generator (3), the trigger pulses of which are fed to the time measuring means (25) and which simultaneously serves as means for generating start signals each of which is correlated in time with the instant of emission of a first or a second auxiliary light pulse and serves for triggering a corresponding signal transit time measurement along the first or the second auxiliary light path,

— in that the receiver arrangement comprises an opto-electric main receiver (23) which receives the measuring light pulses and the reference light pulses and the output signal of which being generated upon the reception of the respective light pulse and being correlated in time with the instant of reception serves as a stop signal for the respective signal transit time measurement along the measuring path or the reference path, respectively, and an opto-electric auxiliary receiver (50), which receives the first and the second auxiliary light pulses and the output signal of which being generated upon the reception of the respective auxiliary light pulse and being correlated in time with the instant of reception, serves as a stop signal for the respective signal transit time measurement along the first or the second auxiliary light path, respectively, and

— in that the evaluating circuit forms the difference between the signal transit time for at least one measuring light pulse and the signal transit time for at least one first auxiliary light pulse, and forms the difference between the signal transit time for at least one reference light pulse and the signal transit time for at least one second auxiliary light pulse, and that the difference between these two differences enters into the difference which is formed for determining the length of the measuring path.

19. A distance measuring apparatus according to claim 13, characterized

— in that the transmitter arrangement comprises an optical main transmitter (1), that the receiver arrangement comprises an opto-electric main receiver (23) and an opto-electric auxiliary receiver (50), and that the time measuring means (25) comprises a means for generating a time base signal,

— in that a first optical switching arrangement (20, 33) is provided, which allows the light pulses generated by the main transmitter (1) either to reach the main receiver (23) as measuring light pulses via the measuring path or to reach the auxiliary receiver (50) as reference light pulses via the reference path (11),

— in that the means for generating the start signals for the signal transit time measurements along the measuring path and the reference path comprises the following parts: an optical auxiliary transmitter (55) being provided in the transmitter arrangement, a second optical switching arrangement (33, 65), which allows the light pulses generated by the auxiliary transmitter (55) either to reach the main receiver (23) as first auxiliary light pulses via a first auxiliary light path (80) establishing a constant transit time or to reach the auxiliary receiver (50) as second auxiliary light pulses via a second auxiliary light path (85) establishing a constant transit time, and a control means (30) which ensures that by means of trigger signals being synchronised with the time base signal the auxiliary transmitter (55) is triggered with a constant time distance before each triggering of the main transmitter (1), that the two optical switching arrangements are so controlled that after each first auxiliary light pulse a measuring light pulse reaches the main receiver (23) and that after each second auxiliary light pulse a reference light pulse reaches the auxiliary receiver (50), and that the output signals generated by the main receiver (23) upon the reception of the first auxiliary light pulses and the output signals generated by the auxiliary receiver (50) upon the reception of

the second auxiliary light pulses serve as start signals for the signal transit time measurements along the measuring path and the reference path, respectively, whereas the output signals generated by the main receiver (23) upon the reception of the measuring light pulses and the output signals generated by the auxiliary receiver (50) upon the reception of the reference light pulses serve as stop signals for the respective signal transit time measurements.

20. A distance measuring apparatus according to any of claims 14 to 19, characterized in that the optical switching means is a mechanically movable mirror arrangement (10).

21. A distance measuring apparatus according to any of claims 14 to 19, characterized in that the optical switching means comprises a statical beam splitter (60, 77) by means of which an input light path is branched into at least two output light paths, in that in each of the output light paths a damping means (20, 65, 33) is arranged which can be switched back and forth between a high transparency and a very small transparency, and in that the damping means (20, 33 or 20, 65) are so controllable, that in any case only one of them has a high transparency and the other one has a low transparency.

22. A distance measuring apparatus according to any of claims 18 to 21, characterized in that the photoelectric transducer of the auxiliary receiver (50) is a PIN-diode.

23. A distance measuring apparatus according to any of claims 13 to 22, characterized in that in front of each main receiver (23) and in front of each auxiliary receiver (50) there is arranged an interference filter (21, 48).

**Revendications**

1. Procédé pour mesurer la distance entre un lieu de mesure et un objet visé, dans lequel:
— l'objet visé (17) est éclairé par des impulsions lumineuses dont chacune est engendrée par un dispositif émetteur optique (1; 1, 55) se trouvant au lieu de mesure lorsqu'est produit un signal de déclenchement amené à ce dispositif émetteur,
— les impulsions lumineuses réfléchies sur l'objet visé sont converties au lieu de mesure en des signaux de sortie électriques au moyen d'un dispositif récepteur opto-électrique (23; 23, 50), et:
— la longueur du trajet de mesure conduisant du lieu de mesure à l'objet visé et revenant au lieu de mesure est déterminée en utilisant le résultat d'une mesure du temps de parcours du signal sur le trajet de mesure qui est déclenchée par un signal de départ en corrélation avec l'instant d'émission d'une impulsion lumineuse et qui est terminée par un signal d'arrêt qui est dérivé du signal de sortie engendré par l'impulsion lumineuse concernée,
caractérisé par le fait que:
— en plus de la mesure du temps de parcours du signal sur le trajet de mesure, à chaque fois en alternance avec cette mesure et indépendamment d'elle, on réalise une mesure du temps de parcours du signal sur un trajet de référence s'étendant à l'intérieur de l'appareil entre le dispositif émetteur (1; 1, 55) et le dispositif récepteur (23; 23, 50), et:
— pour déterminer la longueur du trajet de mesure, on forme la différence entre les valeurs obtenues pour les deux mesures de temps de parcours du signal.

2. Procédé selon la revendication 1, caractérisé par le fait:
— que les impulsions lumineuses sont engendrées par un émetteur optique unique (1) prévu dans le dispositif émetteur et arrivent au dispositif récepteur, soit comme impulsions lumineuses de mesure par le trajet de mesure, soit comme impulsions lumineuses de référence par le trajet de référence (11),
— que les impulsions lumineuses de mesure, après avoir parcouru le trajet de mesure, et les impulsions lumineuses de référence, après avoir parcouru le trajet de référence (11), sont reçues par un seul récepteur opto-électrique (23) prévu dans le dispositif récepteur, et:

— que, pour chaque mesure du temps de parcours du signal, l'impulsion de déclenchement fournie pour engendrer chaque impulsion lumineuse de mesure ou chaque impulsion lumineuse de référence sert de signal de départ, et le signal de sortie engendré par le récepteur (23) lors de la réception de l'impulsion lumineuse de mesure ou de l'impulsion lumineuse de référence concernée sert de signal d'arrêt.

3. Procédé selon la revendication 1, caractérisé par le fait:
— que les impulsions lumineuses sont engendrées par un émetteur optique unique (1) prévu dans le dispositif émetteur et arrivent au dispositif récepteur, soit comme impulsion lumineuse de mesure par le trajet de mesure, soit comme impulsion lumineuse de référence par le trajet de référence (11),
— que les impulsions lumineuses de mesure, après avoir parcouru le trajet de mesure, et les impulsions lumineuses de référence, après avoir parcouru le trajet de référence (11), sont reçues par un récepteur opto-électrique principal (23) prévu dans le dispositif récepteur,

— qu'une partie des impulsions lumineuses engendrées par l'émetteur est dérivée à chaque fois avant leur injection dans le trajet de mesure ou dans le trajet de référence (11), et injectée comme impulsion lumineuse auxiliaire dans un trajet lumineux auxiliaire (46), qui établit un temps de parcours constant et qui amène les impulsions lumineuses auxiliaires à un récepteur opto-électrique auxiliaire (50) prévu dans le dispositif récepteur, et:
— que, pour chaque mesure du temps de parcours du signal, le signal de sortie engendré par le récepteur auxiliaire (50) lors de la réception de chaque impulsion lumineuse auxiliaire sert de signal de départ et le signal de sortie engendré par le récepteur principal (23) lors de la réception de l'impulsion lumineuse de mesure associée ou de l'impulsion lumineuse de référence associée sert de signal d'arrêt.

4. Procédé selon la revendication 1, caractérisé par le fait:

– que des impulsions lumineuses engendrées par un émetteur opto-électrique principal (1) prévu dans le dispositif émetteur sont injectées comme impulsions lumineuses de mesure dans le trajet de mesure,

– que des impulsions lumineuses engendrées par un émetteur optique auxiliaire (55) prévu dans le dispositif émetteur sont injectées comme impulsions lumineuses de référence dans le trajet de référence (11),

– que les impulsions lumineuses de mesure, après avoir parcouru le trajet de mesure, et les impulsions lumineuses de référence, après avoir parcouru le trajet de référence (11), sont reçues par un récepteur opto-électrique principal (23) prévu dans le dispositif récepteur, et:

– qu'une partie des impulsions lumineuses de mesure engendrées par l'émetteur principal (1) est dérivée à chaque fois avant leur injection dans le trajet de mesure, et injectée comme première impulsion lumineuse auxiliaire dans un premier trajet lumineux auxiliaire (61) qui établit un temps de parcours constant et qui amène les premières impulsions lumineuses auxiliaires à un récepteur opto-électrique auxiliaire (50) prévu dans le dispositif récepteur,

– qu'une partie des impulsions lumineuses de référence engendrées par l'émetteur auxiliaire (55) est dérivée à chaque fois avant leur injection dans le trajet de référence (11), et injectée comme deuxième impulsion lumineuse auxiliaire dans un deuxième trajet lumineux auxiliaire (73), qui établit un temps de parcours constant et qui amène les deuxièmes impulsions lumineuses auxiliaires au récepteur auxiliaire (50), et:

– que, pour la mesure concernée du temps de parcours du signal sur le trajet de mesure, le signal de sortie engendré par le récepteur auxiliaire (50) lors de la réception d'une première impulsion lumineuse auxiliaire sert de signal de départ et le signal de sortie engendré par le récepteur principal (23) lors de la réception de l'impulsion lumineuse de mesure associée sert de signal d'arrêt, et, pour la mesure concernée du temps de parcours du signal sur le trajet de référence, le signal de sortie engendré par le récepteur auxiliaire (50) lors de la réception d'une seconde impulsion lumineuse auxiliaire sert de signal de départ et le signal de sortie engendré par le récepteur principal (23) lors de la réception de l'impulsion lumineuse de référence associée sert de signal d'arrêt.

5. Procédé selon la revendication 1, caractérisé par le fait:

– que des impulsions lumineuses engendrées par un émetteur optique principal (1) prévu dans le dispositif émetteur sont envoyées vers le dispositif récepteur, soit comme impulsions lumineuses de mesure par le trajet de mesure, soit comme premières impulsions lumineuses auxiliaires par un premier trajet lumineux auxiliaire (61) qui établit un temps de parcours constant,

– que des impulsions lumineuses engendrées par un émetteur optique auxiliaire (55) prévu dans le dispositif émetteur sont envoyées vers le dispositif récepteur, soit comme impulsions lumineuses de référence par le trajet de référence (11), soit comme secondes impulsions lumineuses auxiliaires par un second trajet lumineux auxiliaire (73) qui établit un temps de parcours constant,

– que les impulsions lumineuses de mesure, après avoir parcouru le trajet de mesure, et les impulsions lumineuses de référence, après avoir parcouru le trajet de référence (11), sont reçues par un récepteur opto-électrique principal (23) prévu dans le dispositif récepteur,

– que les premières impulsions lumineuses auxiliaires, après avoir parcouru le premier trajet lumineux auxiliaire (61), et les secondes impulsions lumineuses auxiliaires, après avoir parcouru le second trajet lumineux auxiliaire (73), sont reçues par un récepteur opto-électrique auxiliaire (50) prévu dans le dispositif récepteur,

– que, par un déclenchement correspondant de l'émetteur principal (1) et de l'émetteur auxiliaire (55), et par transmission alternée correspondante aux divers trajets lumineux, ou moins une impulsion lumineuse de mesure, une première impulsion lumineuse auxiliaire, une impulsion lumineuse de référence, et une seconde impulsion lumineuse auxiliaire sont engendrées, et que, pour chacune de ces impulsions lumineuses, on mesure le temps de parcours du signal, l'impulsion de déclenchement associée servant à chaque fois de signal de départ, et le signal de sortie engendré par le récepteur principal (23) ou par le récepteur auxiliaire (50) lors de la réception de l'impulsion lumineuse concernée servant de signal d'arrêt, et:

– que l'on forme la différence entre le temps de parcours du signal d'au moins une impulsion lumineuse de mesure et le temps de parcours du signal d'au moins une première impulsion lumineuse auxiliaire, et la différence entre le temps de parcours du signal d'au moins une impulsion lumineuse de référence et le temps de parcours du signal d'au moins une seconde impulsion lumineuse auxiliaire, et que la différence entre ces deux différences passe dans la différence formée pour la détermination de la longueur du trajet de mesure.

6. Procédé selon la revendication 1, caractérisé par le fait:

– que des impulsions lumineuses engendrées par un émetteur optique principal (1) prévu dans le dispositif émetteur arrivent au dispositif récepteur, soit comme impulsions lumineuses de mesure par le trajet de mesure, soit comme premières impulsions lumineuses de référence par le trajet de référence (11),

– que des impulsions lumineuses engendrées par un émetteur optique auxiliaire (55) prévu dans le dispositif émetteur arrivent au dispositif récepteur, soit comme premières impulsions lumineuses auxiliaires par un premier trajet lumineux auxiliaire (80) qui établit un temps de parcours constant, soit comme secondes impulsions lumineuses auxiliaires par un second trajet lumineux auxiliaire (85), qui établit un temps de parcours constant.

– que les impulsions lumineuses de mesure, après avoir parcouru le trajet de mesure, et les premières impulsions lumineuses auxiliaires, après avoir parcouru le premier trajet lumineux auxiliaire (80), sont reçues par un récepteur opto-électrique principal (23) prévu dans le dispositif récepteur,

– que les impulsions lumineuses de référence, après avoir parcouru le trajet de référence (11), et les secondes impulsions lumineuses auxiliaires, après avoir parcouru le second trajet lumineux auxiliaire (83), sont reçues par un récepteur opto-électrique auxiliaire (50) prévu dans le dispositif récepteur,

– qu'à l'aide d'impulsions de déclenchement qui sont synchronisées avec un signal de base de temps, l'émetteur principal (1) et l'émetteur auxiliaire (55) sont commandés, et les impulsions lumineuses engendrées sont transmises en alternance aux divers trajets lumineux, de telle manière que prennent naissance au moins une première impulsion lumineuse auxiliaire, et ensuite une impulsion lumineuse de mesure à un intervalle de temps fixe pouvant être prédéterminé, ainsi qu'au moins une seconde impulsion lumineuse auxiliaire et ensuite une impulsion lumineuse de référence avec le même intervalle de temps,

– que, pour la mesure correspondante du temps de parcours du signal, le signal de sortie fourni par le récepteur principal (23) ou par le récepteur auxiliaire (50), lors de la réception de la première ou de la seconde impulsion lumineuse concernée, respectivement, sert de signal de départ, et le signal de sortie fourni par le récepteur principal (23) ou par le récepteur auxiliaire (50), lors de la réception de l'impulsion lumineuse de mesure ou de l'impulsion lumineuse de référence concernée, respectivement, sert de signal d'arrêt.

7. Procédé selon l'une des revendications 2 ou 5, caractérisé par le fait:

– que les signaux de déclenchement sont utilisés à chaque fois sans être retardés comme signaux de départ pour la mesure concernée du temps de parcours du signal et avec un retard prédéterminé pour libérer l'impulsion lumineuse concernée.

8. Procédé selon l'une des revendications 1 à 5, caractérisé par le fait qu'un signal de base de temps est engendré, que les impulsions de déclenchement sont engendrées indépendamment du signal de base de temps, que, pour chaque mesure du temps de parcours du signal, on obtient une première valeur de mesure fine par une mesure analogique de l'intervalle de temps du signal de départ concerné jusqu'à un flanc consécutif défini du signal de base de temps, et une seconde valeur de mesure fine par une mesure analogique de l'intervalle de temps du signal d'arrêt concerné jusqu'à un flanc consécutif défini du signal de base de temps, et que, pour chaque valeur de mesure de la distance, on obtient une valeur de mesure grossière pour les valeurs de mesure du temps de parcours du signal sur le trajet de mesure par comptage des flancs du signal de base de temps qui sont situés entre le flanc défini suivant le signal de départ et le flanc du signal de base de temps qui suit le flanc défini suivant le signal d'arrêt.

9. Procédé selon l'une des revendications 1 à 6, caractérisé par le fait qu'un signal de base de temps est engendré, que chaque impulsion de déclenchement est engendrée en synchronisme avec un flanc du signal de base de temps, que, pour chaque mesure du temps de parcours du signal, on obtient une valeur de mesure fine par une mesure analogique de l'intervalle de temps du signal d'arrêt concerné jusqu'à un flanc consécutif défini à chaque fois du signal de base de temps, et que, pour chaque valeur de mesure de la distance, on obtient une valeur de mesure grossière pour au moins une valeur de mesure du temps de parcours du signal sur le trajet de mesure par comptage des flancs du signal de base de temps qui sont situés entre un flanc présentant une corrélation définie par rapport à l'impulsion de déclenchement associée et le flanc qui suit le flanc du signal de base de temps terminant la mesure analogique associée.

10. Procédé selon la revendication 8 ou 9, caractérisé par le fait que, pour chaque valeur de mesure du temps de parcours du signal, on obtient une valeur de mesure grossière par comptage des flancs correspondants du signal de base de temps.

11. Procédé selon l'une des revendications 1 à 10, caractérisé par le fait que chaque mesure individuelle du temps de parcours du signal sur le trajet de mesure est suivie d'une mesure individuelle du temps de parcours du signal sur le trajet de référence, et inversement, et que l'on obtient à chaque fois une valeur mesurée individuelle de la distance en formant la différence entre une valeur moyenne de plusieurs valeurs de mesure du temps de parcours du signal sur le trajet de mesure et une valeur moyenne de plusieurs valeurs de mesure du temps de parcours du signal sur le trajet de référence.

12. Procédé selon la revendication 11, caractérisé par le fait que les impulsions de déclenchement pour celles des impulsions lumineuses dont les valeurs de mesure du temps de parcours du signal sur le trajet de mesure ou de référence servent à former les valeurs moyennes qui servent à obtenir une valeur individuelle de mesure de distance, sont commandées dans le temps de telle manière que ces impulsions lumineuses arrivent périodiquement au dispositif récepteur.

13. Télémètre pour la mise en œuvre du procédé selon la revendication 1, avec:

– un générateur de signaux de déclenchement (3),

– un dispositif émetteur optique (1; 1, 55) commandé par le générateur de signaux de déclenchement pour engendrer des impulsions lumineuses,

– un dispositif récepteur opto-électrique (23; 23, 50) pour convertir les impulsions lumineuses réfléchies sur un objet visé (17) en des signaux électriques de sortie,

– des dispositifs (3; 50; 3, 55) pour engendrer des signaux de départ qui sont à chaque fois corrélés dans le temps avec l'émission d'une impulsion lumineuse et qui déclenchent à chaque fois une mesure du temps de parcours du signal sur le trajet de mesure (7, 15, 19, 22) allant du dispositif émetteur à l'objet visé et revenant au dispositif récepteur,

– des dispositifs (23) pour dériver des signaux d'arrêt à partir des signaux électriques de sortie pour terminer la mesure du temps de parcours du signal sur le trajet de mesure,

– un dispositif de mesure du temps (25) commandé par les signaux de départ et d'arrêt pour déterminer le temps de parcours du signal sur le trajet de mesure,

– un trajet de référence (11) interne à l'appareil qui s'étend entre le dispositif émetteur et le dispositif récepteur et qui est également parcouru par des impulsions lumineuses venant du dispositif émetteur, caractérisé par:

– des dispositifs de commande (3, 10, 30, 33, 65) pour engendrer les impulsions lumineuses parcourant le trajet de référence en alternance avec les impulsions lumineuses parcourant le trajet de mesure, et indépendamment d'elles,

– des dispositifs (3; 50; 3, 55) pour engendrer des signaux de départ pour le dispositif de mesure du temps, à chaque fois à des instants qui présentent une distance prédéterminée de l'instant de l'émission d'une impulsion lumineuse parcourant le trajet de référence,

– des dispositifs (23; 23, 50) pour engendrer des signaux d'arrêt pour le dispositif de mesure du temps lors de la réception dans le dispositif récepteur d'impulsions lumineuses ayant parcouru le trajet de référence,

– un circuit d'évaluation (30) pour obtenir la différence des temps de parcours des signaux mesurés à chaque fois par le dispositif de mesure du temps (25) lors du parcours du trajet de mesure ou du trajet de référence par les impulsions lumineuses.

14. Télémètre selon la revendication 13, caractérisé par le fait:

– que le dispositif émetteur comprend un émetteur optique unique (1),

– qu'il est prévu un dispositif de commutation optique (10) qui fait arriver au dispositif récepteur les impulsions lumineuses engendrées par l'émetteur (1), soit par le trajet de mesure comme impulsions lumineuses de mesure, soit par le trajet de référence (11) comme impulsions lumineuses de référence,

– que le dispositif pour engendrer les signaux de départ pour les mesures des temps de parcours des signaux sur le trajet de mesure et sur le trajet de référence est le générateur de signaux de déclenchement (3) dont les impulsions de déclenchement sont amenées au dispositif de mesure du temps (25),

– que le dispositif récepteur comprend un récepteur opto-électrique unique (23) qui reçoit aussi bien les impulsions lumineuses de mesure que les impulsions lumineuses de référence et dont le signal de sortie engendré lors de la réception de chaque impulsion lumineuse sert de signal d'arrêt pour la mesure correspondante du temps de parcours du signal.

15. Télémètre selon la revendication 14, caractérisé par le fait que les impulsions de déclenchement engendrées par le générateur de signaux de déclenchement (3) sont amenées au dispositif de mesure du temps (25) sans retard et à l'émetteur (1) par un organe retardateur (2) qui présente un temps de retard pouvant être fixé à l'avance.

16. Télémètre selon la revendication 13, caractérisé par le fait:

– que le dispositif émetteur comprend un émetteur optique unique (1),

– qu'il est prévu un dispositif de commutation optique (10) qui fait arriver au dispositif récepteur les impulsions lumineuses engendrées par l'émetteur (1), soit par le trajet de mesure comme impulsions lumineuses de mesure, soit par le trajet de référence (11) comme impulsions lumineuses de référence,

– que le dispositif pour engendrer les signaux de départ pour les mesures des temps de parcours des signaux sur le trajet de mesure et sur le trajet de référence comprend les parties suivantes: un séparateur de rayons (45) monté avant l'émetteur (1) qui dérive une partie de chacune des impulsions lumineuses engendrées par l'émetteur (1) sous la forme d'une impulsion lumineuse auxiliaire, un trajet lumineux auxiliaire (46) qui établit un temps de parcours constant et dans lequel sont injectées les impulsions lumineuses auxiliaires provenant du séparateur de rayons (45), et un récepteur opto-électrique auxiliaire (50) prévu dans le dispositif récepteur qui reçoit les impulsions lumineuses auxiliaires dérivées aussi bien des impulsions lumineuses de mesure que des impulsions lumineuses de référence et engendre alors un signal de sortie qui est corrélé dans le temps avec l'instant de réception et qui est amené au dispositif de mesure du temps (25) comme signal de départ pour la mesure concernée du temps de parcours, et:

– que le dispositif récepteur comprend en outre un récepteur opto-électrique principal (23) qui reçoit aussi bien les impulsions lumineuses de mesure que les impulsions lumineuses de référence et dont le signal de sortie engendré lors de la réception de chaque impulsion lumineuse sert de signal d'arrêt pour la mesure concernée du temps de parcours du signal.

17. Télémètre selon la revendication 13, caractérisé par le fait:

– que le dispositif émetteur comprend un émetteur optique principal (1) dont les impulsions lumineuses sont injectées dans le trajet de mesure en tant qu'impulsions lumineuses de mesure, et un émetteur optique auxiliaire (55) qui est commandé par le générateur de signaux de déclenchement (3) indépendamment de l'émetteur principal (1) et dont les impulsions lumineuses sont injectées dans le trajet de référence (11) en tant qu'impulsions lumineuses de référence,

– que le dispositif pour engendrer les signaux de départ pour les mesures des temps de parcours des signaux sur le trajet de mesure comprend les parties suivantes: un premier séparateur de rayons (60) qui est monté avant l'émetteur principal (1) et qui dérive une partie de chaque impulsion lumineuse de mesure sous la forme d'une première impulsion lumineuse auxiliaire, un premier trajet lumineux auxiliaire (61) qui établit un temps de parcours constant et dans lequel les premières impulsions lumineuses auxiliaires sont injectées par le premier séparateur de rayons (60), et un récepteur opto-électrique auxiliaire (50) qui est prévu dans le dispositif récepteur, qui reçoit les premières impulsions lumineuses auxiliaires, et qui engendre alors à chaque fois un signal de sortie corrélé dans le temps avec l'instant de réception, lequel est amené au dispositif de mesure du temps (25) comme signal de départ pour la mesure concernée du temps de parcours du signal sur le trajet de mesure,

– que le dispositif pour engendrer les signaux de départ pour les mesures des temps de parcours des signaux sur le trajet de référence comprend les parties suivantes: un second séparateur de rayons (70) qui est monté avant l'émetteur auxiliaire (55) et qui dérive une partie de chaque impulsion lumineuse de référence sous la forme d'une seconde impulsion lumineuse auxiliaire, un second trajet lumineux auxiliaire (73) qui établit un temps de parcours constant et dans lequel les secondes impulsions lumineuses auxiliaires sont injectées par le second séparateur de rayons (70), et le récepteur opto-électrique auxiliaire (50) qui reçoit également les secondes impulsions lumineuses auxiliaires et engendre alors à chaque fois un signal de sortie qui est corrélé dans le temps avec l'instant de réception et qui est amené au dispositif de mesure du temps (25) comme signal de départ pour la mesure concernée du temps de parcours du signal sur le trajet de référence, et:

– que le dispositif récepteur comprend en outre un récepteur opto-électrique principal (23) qui reçoit aussi bien les impulsions lumineuses de mesure que les impulsions lumineuses de référence et dont le signal de sortie engendré lors de la réception de chaque impulsion lumineuse et corrélé dans le temps avec l'instant de la réception sert de signal d'arrêt pour la mesure concernée du temps de parcours du signal.

18. Télémètre selon la revendication 13, caractérisé par le fait:

– que le dispositif émetteur comprend un émetteur optique principal (1) et un émetteur optique auxiliaire (55) qui est commandé par le générateur de signaux de déclenchement (3) indépendamment de l'émetteur principal (1),

– qu'il est prévu un premier dispositif de commutation optique (20, 65) qui fait arriver au dispositif récepteur les impulsions lumineuses engendrées par l'émetteur principal (1), soit par le trajet de mesure comme impulsions lumineuses de mesure, soit comme impulsions lumineuses auxiliaires par un premier trajet lumineux auxiliaire (61) qui établit un temps de parcours constant,

– qu'il est prévu un second dispositif de commutation optique (33, 65) qui fait arriver au dispositif récepteur les impulsions lumineuses engendrées par l'émetteur auxiliaire (55), soit par le trajet de référence (11) comme impulsions lumineuses de référence, soit comme secondes impulsions lumineuses auxiliaires par un second trajet lumineux auxiliaire (73) qui établit un temps de parcours constant,

– que le dispositif pour engendrer les signaux de départ pour les mesures des temps de parcours des signaux sur le trajet de mesure et le trajet de référence est le générateur de signaux de déclenchement (3) dont les impulsions de déclenchement sont amenées au dispositif de mesure du temps (25) et qui sert simultanément de dispositif pour engendrer des signaux de départ dont chacun est corrélé dans le temps avec l'instant d'émission d'une première ou d'une seconde impulsion lumineuse auxiliaire et sert au déclenchement d'une mesure correspondante du temps de parcours du signal sur le premier ou le second trajet lumineux auxiliaire,

– que le dispositif récepteur comprend un récepteur opto-électrique principal (23) qui reçoit les impulsions lumineuses de mesure et les impulsions lumineuses de référence et dont le signal de sortie engendré lors de la réception de chaque impulsion lumineuse et corrélé dans le temps avec l'instant de réception, sert de signal d'arrêt pour la mesure concernée du temps de parcours du signal sur le trajet de mesure ou de référence, respectivement, et un récepteur opto-électrique auxiliaire (50) qui reçoit les premières et les secondes impulsions lumineuses auxiliaires et dont le signal de sortie, engendré lors de la réception de chaque impulsion lumineuse auxiliaire et corrélé dans le temps avec l'instant de réception, sert de signal d'arrêt pour la mesure concernée du temps de parcours du signal sur le premier ou, respectivement, le second trajet lumineux auxiliaire, et:

– que le circuit d'évaluation forme la différence entre le temps de parcours du signal pour au moins une impulsion lumineuse de mesure et le temps de parcours du signal pour au moins une première impulsion lumineuse auxiliaire et la différence entre le temps de parcours du signal pour au moins une impulsion lumineuse de référence et le temps de parcours du signal pour au moins une seconde impulsion lumineuse auxiliaire, et que la différence entre ces deux différences passe dans la différence formée pour la détermination de la longueur du trajet de mesure.

19. Télémètre selon la revendication 13, caractérisé par le fait:

– le dispositif émetteur comprend un émetteur optique principal (1), le dispositif récepteur comprend un récepteur opto-électrique principal (23) et un récepteur opto-électrique auxiliaire (50), et le dispositif de mesure du temps (25) comprend un dispositif pour engendrer un signal de base de temps,

– qu'il est prévu un premier dispositif de commutation optique (20, 33) qui fait arriver les impulsions lumineuses engendrées par l'émetteur principal (1), soit au récepteur principal (23) par le trajet de mesure comme impulsions lumineuses de mesure, soit au récepteur auxiliaire (50) par le trajet de référence (11) comme impulsions lumineuses de référence,

– que le dispositif pour engendrer les signaux de départ pour la mesure du temps de parcours des signaux sur les trajets de mesure et de référence comprend les parties suivantes: un émetteur optique auxiliaire (55) prévu dans le dispositif émetteur, un second dispositif de commutation optique (33, 65) qui fait arriver les impulsions lumineuses engendrées par l'émetteur auxiliaire (55), soit au récepteur principal (23) comme premières impulsions lumineuses auxiliaires par un premier trajet lumineux auxiliaire (80) qui établit un temps de parcours constant, soit au récepteur auxiliaire (50) comme secondes impulsions lumineuses auxiliaires par un second trajet lumineux auxiliaire (85) qui établit un temps de parcours constant, et un dispositif de commande (30) qui fait en sorte que l'émetteur auxiliaire (55) soit déclenché avec un intervalle de temps constant avant chaque déclenchement de l'émetteur principal (1), à l'aide de signaux de déclenchement synchronisés avec le signal de base de temps, que les deux dispositifs de commutation optiques sont commandés de telle façon qu'une impulsion lumineuse de mesure arrive au récepteur principal (23) après chaque première impulsion lumineuse auxiliaire et qu'une impulsion lumineuse de référence arrive au récepteur auxiliaire (50) après chaque seconde impulsion lumineuse auxiliaire, et que les signaux de sortie fournis par le récepteur principal (23) lors de la réception des premières impulsions lumineuses auxiliaires et par le récepteur auxiliaire (50) lors de la réception des secondes impulsions lumineuses auxiliaires servent de signal de départ pour les mesures des temps de parcours des signaux sur les trajets de mesure et de référence, cependant que les signaux de sortie fournis par le récepteur principal (23) lors de la réception des impulsions lumineuses de mesure et par le récepteur auxiliaire (50) lors de la réception des impulsions lumineuses de référence servent de signal d'arrêt pour les mesures concernées des temps de parcours des signaux.

20. Télémètre selon l'une des revendications 14 à 19, caractérisé par le fait que le dispositif de commutation optique est un dispositif à miroir (10) mobile mécaniquement.

21. Télémètre selon l'une des revendications 14 à 19, caractérisé par le fait que le dispositif de commutation optique comprend un diviseur statique de rayons (60, 77) par lequel un trajet lumineux d'entrée est divisé au moins en deux trajets lumineux de sortie, que sur chacun des trajets lumineux de sortie est monté un dispositif d'atténuation (20, 65, 33) qui peut être commuté entre une transparence élevée et une transparence très faible, et que les dispositifs d'atténuation (20, 33 ou 20, 65) peuvent être commandés de telle façon qu'en permanence, l'un d'eux seulement présente une transparence élevée et l'autre une transparence faible.

22. Télémètre selon l'une des revendications 18 à 21, caractérisé par le fait que le convertisseur photo-électrique du récepteur auxiliaire (50) est une diode PIN.

23. Télémètre selon l'une des revendications 13 à 22, caractérisé par le fait qu'un filtre à interférences (21, 48) est monté devant chaque récepteur principal (23) et devant chaque récepteur auxiliaire (50).

FIG.1

FIG. 2

ABLAUFSTEUERUNGS-
RECHEN - und
AUSWERTEEINHEIT

HAUPT-
EMPFÄNGER

ZEITMESS-
VORRICHT.

STOP

START

HILFS-
EMPFÄNGER

SENDER

TRIGGER-
GENERATOR

EP 0 066 888 B1

FIG. 3

ABLAUFSTEUERUNGS-
RECHEN-und
AUSWERTEEINHEIT 30

HAUPT-
EMPFÄNGER 23

HILFS-
EMPFÄNGER

ZEITMESS-
VORRICHT. 25

HILFS-
SENDER 55

HAUPT-
SENDER 1

TRIGGER
GENERATOR 3

STOP

START

EP 0 066 888 B1

FIG. 4

FIG. 5